(19) Europäisches Patentamt / European Patent Office / Office européen des brevets

(11) **EP 3 960 286 B1**

(12) **EUROPÄISCHE PATENTSCHRIFT**

(45) Veröffentlichungstag und Bekanntmachung des Hinweises auf die Patenterteilung:
**16.08.2023  Patentblatt 2023/33**

(21) Anmeldenummer: **20192920.5**

(22) Anmeldetag: **26.08.2020**

(51) Internationale Patentklassifikation (IPC):
***B01J 19/00*** *(2006.01)*

(52) Gemeinsame Patentklassifikation (CPC):
**B01J 19/0046;** B01J 2219/00286;
B01J 2219/00306; B01J 2219/00418;
B01J 2219/00587; B01J 2219/00601;
B01J 2219/00707; B01J 2219/00747

(54) **VORRICHTUNG UND VERFAHREN ZUR UNTERSUCHUNG VON FESTSTOFFEN**

METHOD AND APPARATUS FOR ANALYZING SOLIDS

DISPOSITIF ET PROCÉDÉ D'EXAMEN DES SOLIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.03.2022  Patentblatt 2022/09**

(73) Patentinhaber: **HTE GmbH The High Throughput Experimentation Company**
**69123 Heidelberg (DE)**

(72) Erfinder:
- **SCHUNK, Stephan A**
  **69123 Heidelberg (DE)**
- **HANF, Schirin**
  **69123 Heidelberg (DE)**

- **REINING, Sven**
  **67056 Ludwigshafen (DE)**
- **SCHULZ, Christian**
  **69123 Heidelberg (DE)**
- **TROTUS, Ioan-Teodor**
  **69123 Heidelberg (DE)**
- **WITTICH, Knut**
  **76297 Stutensee (DE)**
- **DEJMEK, Michael**
  **69123 Heidelberg (DE)**

(74) Vertreter: **BASF IP Association**
**BASF SE**
**GBI-C006**
**67056 Ludwigshafen (DE)**

(56) Entgegenhaltungen:
EP-A1- 1 258 285       WO-A2-2015/052212
US-A1- 2002 172 629    US-A1- 2003 053 937

**Beschreibung**

Die Erfindung betrifft eine Vorrichtung und ein Verfahren zur Untersuchung von Feststoffen.

Im Stand der Technik sind zahlreiche Vorrichtungen und Verfahren zur Charakterisierung von katalytischen Reaktionen und zur Messung der Reaktionskinetik an Feststoffkatalysatoren bekannt. Eines der Verfahren zur Durchführung von Kinetik-Untersuchungen, das von J. T. Gleaves et al. offenbart wurde, basiert auf der temporären Analyse von Produkten (TAP) (siehe J. T. Gleaves et al., J. Molec. Catal. A: Chemical 315 (2010) 108-134). Zur Durchführung des Verfahrens wird ein Pulsreaktor eingesetzt, wobei ein im Reaktor angeordneter Katalysator dem Reaktionsgas ausgesetzt wird, das in Form von hochfrequenten Pulsen zudosiert wird. Da die Funktion des Verfahrens auf den Bereich der Knudsen-Diffusion beschränkt ist, wird das Verfahren in einem Druckbereich unterhalb des Atmosphärendrucks (Druck <1atm) durchgeführt. Der für das Verfahren eingesetzte Reaktor wird daher auch als Vakuumpulsreaktor bezeichnet. Da die Ausbildung der meisten Katalysatoren unter Reaktionsbedingung erst stattfindet und ein Großteil der Reaktionen nicht bei Niederdruck stattfindet, sind TAP Experimente nicht geeignet, um die Kinetik der Reaktion zu untersuchen.

Ein weiteres Verfahren bezieht sich auf die Analyse von stationären Gleichgewichten mittels isotopenmarkierter Reaktanden. Das Verfahren wird auch als Steady State Isotope Transient Kinetic Analysis bezeichnet, wobei hier die Abkürzung SSITKA verwendet wird. Bei dem Verfahren werden die Isotopenkomponenten verwendet, die an der Reaktion teilnehmen. Die Zuführung der Isotopenkomponenten erfolgt sprunghaft und während der Reaktionen, wobei diese Isotopenkomponenten an der Reaktion teilnehmen. Die Untersuchungen liefern Informationen zu den Interaktionen und Reaktionen der Reaktanden auf den Oberflächen von Katalysator und Reaktand. Das Verfahren ist ausschließlich auf den Isotopenaustausch im stationären Zustand beschränkt und nicht geeignet Reaktionskinetik zu bestimmen.

Zustandsänderungen des Katalysators durch Sprungfunktionen sind somit intrinsisch ausgeschlossen. Es sollte jedoch angemerkt werden, dass die hier aufgeführte Apparatur in der Lage ist SSITKA Experimente durchzuführen. Darüber hinaus werden auch von X. Zheng et al. sowie von M.A. Pepera et al. Verfahren zur Durchführung von Pulsexperimenten offenbart (siehe Appl. Catal. A: Gen. 341 (2008) 86-92 und M.A. Pepera et al., J. Am. Chem. Soc. 107 (1985) 4883-4892), welche Erkenntnisse zu Reaktionsnetzwerken liefern. Bei diesen Verfahren handelt es sich um klassische Pulsexperimente, bei denen eine temporäre Änderung des Gleichgewichts erfolgt, wohingegen in anderen Verfahren ein vollständiger Austausch von Reaktionsgasen vorgenommen wird.

In der WO-A 2015/052212 wird eine Vorrichtung zur Untersuchung von diskontinuierlichen Prozessen beschrieben, wobei die aus dem Reaktionsraum austretende Produktströme zunächst einem oder mehreren Sammelbehältern zugeführt werden.

In der WO-A 2019/020655 wird ein stromabgeführter Strömungsreaktor beschrieben, bei dem ein fluidisiertes Bett mit Katalysatorpartikeln gemeinsam mit einem Eduktgemisch durch das Strömungsrohr geleitet wird.

Eine der Aufgaben, die der vorliegenden Erfindung zugrunde liegt, ist es eine Vorrichtung und ein Verfahren zur Untersuchung von Feststoffen bereitzustellen, die die Rückschlüsse auf kinetische Daten der zugrunde liegenden chemischen Reaktion ermöglicht. Gleichzeitig soll eine Alternative zu bisher bekannten Vorrichtungen und Verfahren bereitgestellt werden. Die Vorrichtung und das Verfahren sollte derart aufgebaut sein, dass auch eine Durchführung des Verfahrens bei hohen Drücken und Temperaturen möglich ist, insbesondere solchen bei Drücken und Temperaturen, die auch in technischen Verfahren zur Anwendung kommen.

Die hier genannte und weitere Aufgaben werden dadurch gelöst, dass eine Vorrichtung und ein Verfahren zur Untersuchung von Feststoffen bereitgestellt werden, bei dem die Feststoffe unter kontrollierten Bedingungen mit Fluiden kontaktiert werden, wobei ein druckstoßfreier Wechsel von Fluiden in einem variablen Druckbereich, vorzugsweise im Druckbereich von 1 bis 200 barg, ermöglicht wird. In der Vorrichtung sind mehrere Fluidkanäle zur Auswahl vorhanden, die in Abhängigkeit der gewählten Verfahrensschritte flexibel geschaltet werden.

Die vorliegende Erfindung betrifft eine Vorrichtung gemäss Anspruch 1.

Jede Durchflusszelle (33, 33', 33",...) umfasst ein Aufnahmeelement für Feststoffe, die es erlaubt ist, den Feststoff in der Durchflusszelle anzuordnen. Vorzugsweise handelt es sich bei der Durchflusszelle (33, 33', 33",...) um einen Rohrreaktor (33, 33', 33",...). Die Ausgestaltung der Aufnahmeelemente sind nicht eingeschränkt und es können alle Arten von Aufnahmeelementen verwendet werden, die dem Fachmann bekannt sind. Beispiele für ein Aufnahmeelemente sind eine poröse Fritte oder ein Gitternetz, das mit einem Glaswollstöpsel versehen ist.

Vorzugsweise verfügt jeder der Fluidkanäle (43, 45, 47,...) über ein eigenes Schaltventilen (53, 55, 57,...). Denkbar ist jedoch die Ausführung der Vorrichtung, bei mehrere Fluidkanäle (43, 45, 47,...) an ein Mehrkanalventil angeschlossen sind und das Mehrkanalventil mehrere unterschiedliche Ausgangsleitungen aufweist, die in der gleichen Weise geschaltet werden können wie die einzelnen Schaltventile (53, 55, 57,...). Die Auswahl von Schaltventilen richtet sich nach den Anforderungen, die durch das untersuchte Verfahren gegeben werden und die Geschwindigkeit beim Schaltprozess. Beispielsweise lassen sich mit elektromagnetischen Antrieben Schaltzeiten im Bereich von 10 bis 50 Millisekunden erreichen. Bei einigen Ventilen liegen die Schaltzeiten bei 8 Millisekunden. Mit pneumatischen Antrieben sind Schaltzeiten im Bereich von 100 bis 1000 Millisekunden oder kürzer zu erreichen. Zu beachten ist das sich die Schaltzeiten von Nadelventilen gegenüber denen von Kugelhähnen unterscheiden können. Nadelventile haben den Vorteil, dass diese zum Teil auch bei höheren Temperaturen von bis zu 500 °C noch gut betrieben werden können. Die Kugelhahnventile, sofern diese mit Teflondichtungen ausgestattet sind, lassen sich bei Temperaturen bis 180 °C oder bis 200 °C betreiben. Die Belastbarkeit der einzelnen Ventile richtet sich auch nach den jeweiligen Verfahrensbedingungen in Bezug auf Druck und Temperatur sowie die Anzahl der vorgenommenen Schaltzyklen. Vorzugswiese umfasst das Mehrkanalschaltventil Umschaltventile gegenüber An-Aus-Schaltventilen, da die Synchronisierung der An-Aus-Schaltventile mit einem höheren technischen Aufwand verbunden ist und auch anfälliger für Störungen sein kann.

Die Anzahl der Fluidkanäle (43, 45, 47,...), die an einzelne Schaltventile(53, 55, 57,...) oder ein einzelnes Mehrkanalschaltventil angeschlossen sind, ist aus technischen Gründen limitiert. Ein wesentlicher Aspekt der vorliegenden Erfindung ist jedoch, dass immer eine Pluralität von Fluidkanälen an je ein Schaltventil (53, 55, 57,...) oder an ein Mehrkanalventil angeschlossen sind, vorzugsweise liegt die Anzahl an Fluidkanälen im Bereich von 3 - 20, weiter vorzugsweise im Bereich von 4 - 10.

Ein wesentlicher Aspekt der erfindungsgemäßen Vorrichtung ist, dass die Fluidkanäle [ODER sämtliche Fluidkanäle] (43, 45, 47,...) über die Schaltventile (53, 55, 57,...) eine Verbindung zum Druckregler (64) aufweisen, der in der Ableitung (35) angeordnet ist, wobei die Verbindung durch die Bypassleitung (61) realisiert wird, die durch das Verbindungsstück (63) mit dem Ableitung (35) in Verbindung steht. Somit regelt der Druckregler (64) den Druck in der Durchflusszelle und gleichzeitig wird druckstoßfreier Wechsel von Fluiden ermöglicht, da der Fluidstrom, der durch die Fluidkanäle geführt wird, jeweils mit dem gleichen Druckregler - es handelt sich um den Druckregler (64) - in Wirkverbindung steht wie die Ableitung (35) der oder den Durchflusszellen (33, 33', 33",...).

In einer bevorzugten Ausführungsform ist die Vorrichtung dadurch gekennzeichnet, dass das es sich bei dem Druckregler (64) in der Ableitung (35) um ein Domdruckregler handelt ist, der Druckregler (64) des Domdruckventils mit Trägerfluidleitung, respektive Zuführungsleitung (31) in Wirkverbindung steht.

In Bezug auf den Druckregler (64) ist festzustellen, dass dieser in Form eines Vordruckregler oder Nachdruckreglers vorliegt. Vorzugsweise ist der Druckregler (64) als Membranregelventil ausgestaltet. Vorzugsweise handelt es sich bei den Membranregelventilen um Equilibar-Ventile oder Ventile, die nach einem ähnlichen Funktionsprinzip operieren. Vorzugweise ist zumindest das Ventil des Nachdruckreglers mit einem Membranregelventil ausgestattet. Kennzeichnend für derartige Membranregelventile sind die Regelzeiten, die im Bereich von 2 - 20 Sekunden liegen und die daher relativ kurz sind.

In einer weiteren Ausführungsform ist die Vorrichtung dadurch gekennzeichnet, dass das Innenvolumen einer einzelnen Durchflusszelle (33, 33', 33",...) jeweils im Bereich von 0,2 - 100 cm$^3$ liegt, vorzugsweise im Bereich von 0,5 - 50 cm$^3$, vorzugsweise handelt es sich bei den Durchflusszellen (33, 33', 33",...) um Rohrreaktoren (33, 33', 33",...).

Die erfindungsgemäße Vorrichtung und das erfindungsgemäße Verfahren betrifft die Untersuchung von Feststoffen, die in zumindest einer Durchflusszelle (33, 33', 33",...) angeordnet sind. Eine Durchflusszelle (33, 33', 33",...) ist dadurch gekennzeichnet, dass dieser zumindest eine Zuführungsleitung und zumindest eine reaktionsraumausgangsseitige Leitung aufweist. Vorzugsweise ist die Durchflusszelle (33, 33', 33",...) als Rohrreaktor (33, 33', 33",...) ausgestaltet. Von Bedeutung ist, dass die Prozessbedingungen bei der Durchführung des Verfahrens sehr genau kontrolliert werden können, so dass es möglich ist, die Feststoffe unter Bedingungen zu untersuchen, die nicht durch Störeffekte beeinträchtigt werden. Das ist insbesondere bei der Durchführung des Verfahrens bei hohen Drücken im Bereich von 1 bis 300 bara, bevorzugt 5 bis 200 bara, besonders bevorzugt 20 bis 100bara und hohen Temperaturen im Bereich von 50 bis 1000°C, bevorzugt 100 bis 800°C, besonders bevorzugt 150 bis 700°C sehr vorteilhaft.

In einer weiter bevorzugten Ausführungsform sind die erfindungsgemäße Vorrichtung und das erfindungsgemäße Verfahren dadurch gekennzeichnet, dass die in den Leitungen vorliegenden Totvolumina gering sind. Unter geringem Totvolumen ist eine Totvolumen zu verstehen, dass mindestens 50 % geringer ist als das Innenvolumen einer Durchflusszelle beziehungsweise eines Rohrreaktors. Vorzugsweise ist das Totvolumen in der Zuleitung nicht größer als ein Drittel (33%) des Innenvolumens einer Durchflusszelle beziehungsweise eines Rohrreaktors. Das Gleiche gilt für das Totvolumen der reaktionsraumausgangseitigen Leitung, die vorzugsweise nicht größer ist als ein Drittel des Reaktorvolumens. Vorzugsweise weisen die Leitungen der Vorrichtung Durchmesser auf, die im Bereich von 1 - 10 mm liegt, weiter vorzugsweise liegen die Durchmesser im Bereich von 2 - 8 mm. Die Angabe zum Innenvolumen einer Durchflusszelle beziehungsweise eines Rohrreaktors bezieht sich auf das Innenvolumen dieser Elemente im unbefüllten Zustand beziehungsweise auf das Innenvolumen des Leerrohrs.

Besonders bevorzugt ist eine Ausführungsform, die dadurch gekennzeichnet ist, dass jeder Analysenleitungen (37, 37', 37",...) von der Ableitung (35) zur online-Analyseneinheit (40) je ein Restriktionselement (39, 39', 39",...) , vorzugsweise eine Drossel (39, 39', 39",...), weiter vorzugsweise eine Kapillare (39, 39', 39",...), angeordnet ist.

Als Restriktorelement (39, 39', 39",...) können Elemente eingesetzt werden, die ausgewählt sind aus der Gruppe Lochblende, poröse Fritte, mikrogefertigter Kanal, 3D-Druck gefertigte Mikroelemente, Mikrochip, Kapillare, Kapillarkassette, vorzugsweise mit Temperierungselement. Insbesondere werden als Restriktorelement eingesetzt.

In einer weiteren Ausführungsform der erfindungsgemäßen Vorrichtung ist in der Zuführungsleitung (31) ein Restriktorelement angeordnet. In Bezug auf die Anordnung eines Restriktorelementes in der Zuführungsleitung ist festzustellen, dass es Synergieeffekte gibt, was die Minimierung von Störprozessen betrifft. Die Minimierung von Störprozessen bedeutet, dass die Druckschwankungen, die durch den Wechsel von einem Fluidkanal zu einem anderen ausgewählten Fluidkanal nicht zum Innenraum der Durchflusszelle weitergeleitet werden. Das Restriktorelement wirkt als Dämpfungselement, das die Effekte, die in Verbindung mit der Entkopplung der Regelung und der schnellen Ventilschaltung stehen, weiter verstärkt werden können. Durch ein Restriktorelement wird der Leitungsquerschnitt reduziert. Beispielsweise durch eine Kapillare, deren Leitungsquerschnitt im Bereich von 50 - 750 μm liegt, vorzugsweise im Bereich von 100 - 500 μm. Die vorliegenden Angaben zur Ausgestaltung des Restriktorelements betreffen auch das in der Analysenleitung (37) angeordnete Restriktorelement (39).

In einer weiteren Ausführungsform weist die Vorrichtung drei oder mehr Fluidzuführungseinheiten auf, wobei die drei oder mehr Fluidzuführungseinheiten (13, 15, 17...) eine Fluidzuführungseinheit für Trägerfluid (18) umfassen, vorzugsweise weist die Vorrichtung drei Fluidzuführungseinheiten (13, 15, 17...) und eine Trägerfluidzuführungseinheit (18) auf.

Die einzelnen Fluidkanäle (43, 45, 47, ...), die die Fluidzuführungseinheiten (13, 15, 17...) mit den Schaltventilen (53, 55, 57,...) verbinden, sind mit Massenflussreglern (23, 25, 27,...) ausgestattet. Vorzugsweise werden in einzelnen Fluidzuführungseinheiten bereits vorgemischte Fluide bereitgestellt. Mittels der Bereitstellung vorgemischten Fluiden über die Fluidzuführungseinheiten (13, 15, 17...) kann die Komplexität der Vorrichtung reduziert werden.

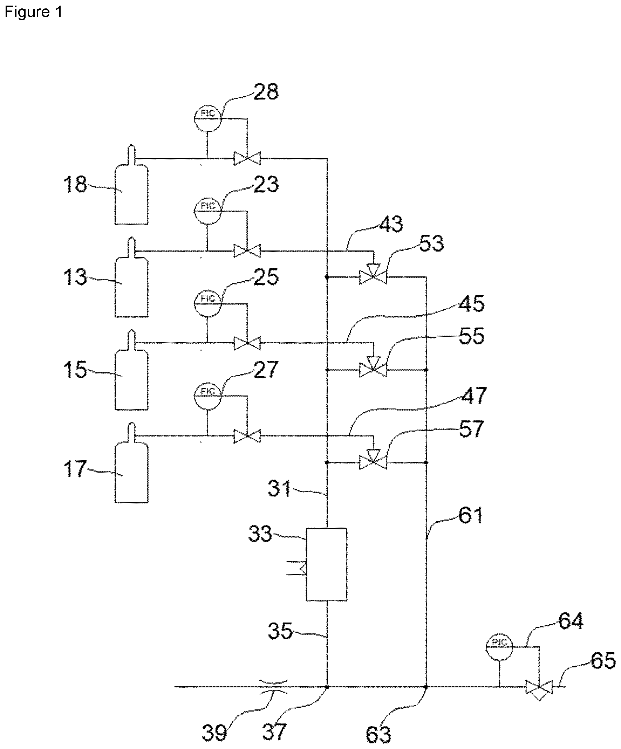

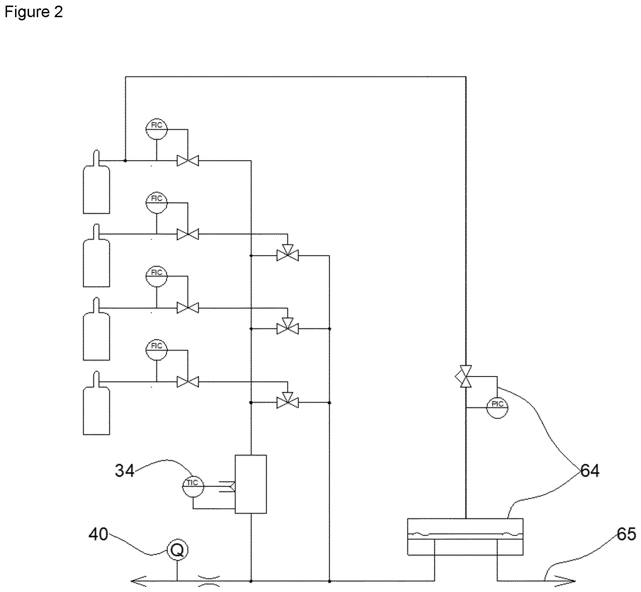

Die Fluidzuführungseinheiten (13, 15, 17...) können in unterschiedlichen Ausführungsformen vorliegen. In einer Form, die sich technisch in einfacher zu Weise realisieren ist, sind die Fluide bereits in der abgemischten Form in einzelnen Druckgaszylindern enthalten (siehe auch Fig.1 und 2). Der Begriff abgemischte Form bedeutet, dass Art und Mengen an Fluidkomponenten für das geplante Verfahren speziell vorbereitet werden. Bei einer großen Anzahl von Komponenten kann die Vorfertigung von Mischungen in einzelnen Druckgaszylindern jedoch auch mit einem technischen Aufwand verbunden sein, so dass es beispielsweise auch möglich ist, eine variable Fluidzuführungseinheiten (13, 15, 17...) bereitzustellen, mit deren Hilfe die jeweils gewünschte Fluidmischung an Komponenten gleichzeitig abgemischt und in der gewünschten Mischung für jeden Fluidkanal einzeln bereitgestellt werden.

Weiter bevorzugt ist eine Vorrichtung, die zwei oder mehr Durchflusszellen (33', 33"...) aufweist, wobei die Ableitungen der einzelnen Durchflusszellen (33', 33"...) mit einer gemeinsamen Ableitung (35) verbunden sind und die gemeinsame Ableitung (35) das Verbindungsstück (63) zur Bypassleitung (61) und den Druckregler (64) aufweist und entweder die Analysenleitungen (37', 37"...) von jeder einzelnen Durchflusszelle (33', 33"...) mit je einer online-Analyseneinheit (40) oder die Analysenleitungen (37', 37"...) mit einer Ventilanordnung, vorzugsweise einem Multiportventil (42), und einer gemeinsamen online-Analyseneinheit (40) verbunden sind.

Mittels der Vorrichtung, die mit zwei oder mehr Durchflusszellen (33', 33"...) ausgestattet ist, wird der Durchsatz erhöht und gleichzeitig kann die Datenqualität der Messdaten verbessert werden, da die parallel getesteten Feststoffe mit einer höheren statistische Signifikanz der Ergebnisse und damit final auch bei einer erhöhten Genauigkeit getestet werden können. Die erhöhte Genauigkeit ist unter anderem auch dadurch bedingt, dass die Mess- und Regeleinheiten zur Steuerung der Vorrichtung identisch sind. Die Anzahl der an die Vorrichtung angeschlossenen online-Analyseneinheit (40) hängt auch damit zusammen, wie lange die einzelne Analyse dauert und welche Analysenfrequenz zur Charakterisierung des Produktfluids benötigt wird.

Darüber hinaus bevorzugt ist eine Vorrichtung, bei der die Durchflusszellen (33, 33', 33"...) mit einer gemeinsamen Beheizungsvorrichtung (34) oder jeweils mit einzelnen Beheizungsvorrichtungen (34) ausgestattet sind, vorzugsweise sind weitere Elemente der Vorrichtung mit Beheizungsvorrichtungen ausgestattet, weiter vorzugsweise umfasst die Vorrichtung auch eine Vakuum-Pumpe, die mit der Ableitung (35) in Wirkverbindung steht.

Des Weiteren betrifft die Erfindung ein Verfahren zur Untersuchung von Feststoffen, das (vorzugsweise) mit der erfindungsgemäßen Vorrichtung in einer der Ausführungsformen durchgeführt wird, die Gegenstand der Beschreibung sind, wobei das Verfahren die nachfolgenden Schritte umfasst:

(i) zumindest eine mit Feststoff beladene Durchflusszelle(33, 33', 33"...) wird in der Vorrichtung positioniert und es werden zwei oder mehr unterschiedliche Fluide bereitgestellt, bei denen es sich um ein Gas oder ein Gemisch aus Gas und Flüssigkeit handelt, wobei ein Fluid ein oder mehrere Komponenten in Form von Atomen oder Molekülen enthält, vorzugsweise handelt es sich bei Fluiden um Gase, wobei sich unterschiedliche Fluide in ihrer Zusammensetzung unterscheiden, und zwar zumindest in Bezug eine chemische Komponente, die strukturell anders ist und/oder eine andere Stoffmenge an Komponente aufweist gegenüber den anderen Fluiden,

(ii) die bereitgestellten Fluide werden in pulsartiger Form und im Wechsel in die Durchflusszelle eingeleitet, wobei die Dauer der Pulse eines ausgewählten Fluids vorgegeben wird, vorzugsweise wird die Dauer der Pulse von zwei Fluiden vorgegeben,

(iii) zumindest Teile des durch die Ableitung austretende Fluidstrom werden analytisch charakterisiert, vorzugsweise in Form einer differentiellen Analyse des Fluidstroms in Abhängigkeit von der Zeit.

Die erfindungsgemäße Vorrichtung und das erfindungsgemäße Verfahren beziehen sich auf die Untersuchung von Feststoffen, welche als Adsorbenzien oder in der Form von Feststoffkatalysatoren vorliegen. Die Feststoffe können in der Form von pulverförmigen Partikeln oder in der Form von Extrudaten vorliegen. Bei pulverförmigen Feststoffen handelt es sich um Materialien, deren Partikelgröße im Bereich von 10 -1500 $\mu$m liegt, vorzugsweise im Bereich von 20 - 1000 $\mu$m, darüber hinaus bevorzugt im Bereich von 50 - 500 $\mu$m. Ebenfalls bevorzugt ist eine möglichst enge Partikelgrößenverteilung wobei die Größenverteilung vorzugsweise monomodal ist. Bei Extrudaten handelt es sich um Formkörper, deren Durchmesser im Bereich von 1 - 20 mm liegt, vorzugsweis im Bereich von 2 - 10 mm. Bei Untersuchungen an Extrudaten ist es möglich, dass diese in pulverförmigen Materialien eingebettet werden, die inerte Materialien darstellen. Durch die Einbettung in inerten Materialien können die Eigenschaften der Katalysatorschüttung noch verbessert werden.

Mittels des erfindungsgemäßen Verfahrens können sowohl Adsorbenzien als auch Adsorptionsprozesse untersucht werden.

In einer bevorzugten Ausführungsform ist das erfindungsgemäße Verfahren dadurch gekennzeichnet, dass der Schritt (ii) des Verfahrens gemäß einem der nachfolgenden Varianten durchgeführt wird:

(ii') in einem ersten Zeitraum werden zwei Fluide im Wechsel jeweils mit konstanter Pulsdauer eingeleitet, wobei die Pulsdauer der Fluide gleich oder verschieden ist, in einem zweiten Zeitraum werden zwei Fluide im Wechsel mit konstanter Pulsdauer eingeleitet, wobei die Pulsdauer von beiden Fluiden gleich oder verschieden ist und wobei sich die Pulsdauer gegenüber der Pulsdauer im ersten Zeitraum unterscheidet;

(ii") zwei oder mehr Fluide werden in die Durchflusszelle eingeleitet, wobei zumindest eines der Fluide so eingeleitet wird, dass die Folge der Pulsdauern dieses zumindest einen Fluids eine Periodizität aufweisen, weiter vorzugsweise werden die Fluide so eingeleitet, dass die Folge der Pulsdauern eine Periodizität aufweisen, die sinusförmig oder die sägezahnförmig ist;

(ii‴) die in den Schritten (ii), (ii') und (ii") genannten Verfahrensabläufe werden in Sequenzen zu Schritten kombiniert, vorzugsweise liegt die Dauer des Einleitens eines einzelnen Fluids, und damit die Dauer eines einzelnen Pulses, im Bereich 0,2 - 600 Sekunden, vorzugsweise im Bereich von 0,5 - 300 Sekunden, darüber hinaus bevorzugt im Bereich von 1 - 120 Sekunden.

Das erfindungsgemäße Verfahren weist eine hohe Sensitivität auf, so dass geringfügige Unterschiede, wie diese beispielsweise auch in Gegenwart von Isotopen auftreten, dazu genutzt werden, um gezielte Zustandsänderungen des Systems herbeizuführen und die diese anhand der analytischen Charakterisierung der Produktfluidströme zu erfassen. Somit betrifft das Verfahren auch gezielte Zustandsänderungen des Systems, die Rahmen des erfindungsgemäßen Verfahrens schaltbar sind und die dem Benutzer des Verfahrens eine Differenzierung zwischen mikrokinetischen und makrokinetischen Effekten ermöglichen. Die Schaltbarkeit steht in Verbindung mit dem gezielten Wechsel von unterschiedlichen Fluiden unter kontrollierten Bedingungen. Ein gezielter Wechsel von unterschiedlichen Fluiden bedeutet, dass mindestens zwei Fluide abwechselnd mit definierter Pulsdauer auf den Reaktor geschaltet werden. Dabei kann die Dauer der einzelnen Pulse variieren. Die Schaltfrequenz und damit die Pulsdauer kann sich über den zeitlichen Verlauf ändern, wobei diese Änderung der Schaltfrequenz oder Pulsmodulation, vorzugsweise gem. dem Schritt (ii) oder dem Schritt (ii') periodisch sein kann und dabei einem Sägezahn oder einer Sinusprofil folgt.

Zur Auswahl von der Fluidpulsdauer in Bezug auf die mittlere Verweilzeit (mVZ). In Bezug auf den Verfahrensschritt (ii') ist festzustellen, dass der Verfahrensschritt einen ersten Zeitraum und einen zweiten Zeitraum umfasst, in denen die Fluide im Wechsel und jeweils mit einer konstanten Pulsdauer in die Durchflusszelle eingeleitet werden. Hierbei ist es bevorzugt, dass die Pulsdauern der einzelnen Fluidpulse so ausgewählt werden, dass die Pulsdauer in einem Zeitraum länger ist als die mittlere Verweilzeit (mVZ) und dass die Pulsdauer kürzer ist als die mittlere Verweilzeit des Fluids im Innenraum des Feststoffbettes beziehungsweise des Katalysatorbettes. Die mittlere Verweilzeit (mVZ) lässt sich anhand der ausgewählten Prozessparameter des Verfahrens ermitteln, wobei die Fluidlast, der Druck und die Temperatur sowie auch die Eigenschaften der Feststoffbettes zu berücksichtigen sind.

Somit sind in einem betrachteten Zeitraum die Pulsdauer eines Fluidpulses länger als die mittlere Verweilzeit und in einem zweiten Zeitraum die Pulsdauer eines Fluidpulses kürzer als die mittlere Verweilzeit.

Besonders bevorzugt wird die Durchflusszelle unter Bedingungen betrieben, unter denen besonders hohe Bodensteinzahlen erreicht werden. Die Bodensteinzahl wird dabei als Kriterium für die Rückvermischung im Reaktor genommen, eine hohe Bodensteinzahl bedeutet, dass die Rückvermischung im Reaktor gering ist. Bevorzugt wird der Reaktor mit einer Bodensteinzahl zwischen 20 und 1000 betrieben, besonders bevorzugt zwischen 30 und 800, ganz besonders bevorzugt zwischen 50 und 500. Für die Bestimmung der Bodensteinzahl werden dabei die folgenden Berechnungen und Messungen vorgenommen:

*Verweilzeitdichtefunktion E(t)*

Die Verweilzeitdichtefunktion bildet den Verlauf der austretenden Tracerkonzentration ab. Ist die Eintrittskonzentration des Tracers $C_{T,0}$ bekannt, kann durch Messen der Konzentration am Austritt $C_{T,A}$ des Reaktors $E(t)$ berechnet werden:

$$E(t) = \frac{C_{T,A}}{\int_0^\infty C_{T,A}\, dt} \approx \frac{C_{T,i}}{\sum_i C_{T,i} \cdot \Delta t_i} = \frac{F(t)_{i+1} - F(t)_i}{t_{i+1} - t_i} = \frac{dF(t)}{dt}$$

Mit

$$F(t) = \int_0^t E(t)\, dt = \frac{C_{T,i} - C_{T,0}}{C_{T,\infty} - C_{T,0}}$$

$C_{T,i}$ = Tracer-Konzentration zum Zeitpunkt i.

*Mittlere Verweilzeit*

In einem realen Strömungsrohr besitzen nicht alle Teilchen eine identische Verweilzeit. Experimentell lässt sich die mittlere Verweilzeit wie folgt ermitteln:

$$\bar{t} = \sum_0^t E(t) \cdot t \cdot \Delta t$$

*Berechnung der Bodensteinzahl über die Varianz*

Die Bodensteinzahl beschreibt das Verhältnis zwischen dem konvektiven Stoffstrom und dem axialen Diffusionskoeffizienten:

$$Bo = \frac{Konvektionsstrom}{axialer\ Diffusionskoeffizient} = \frac{u \cdot L}{D_{ax}}$$

Bei konstantem Volumenstrom kann Bo in Näherung über die Gesamtvarianz $\sigma^2$ der Verweilzeitdichtefunktion einer Messreihe berechnet werden:

$$Bo \approx \frac{2}{\sigma^2}$$

mit

$$\sigma^2 = \frac{\sigma_t^2}{\bar{t}^2}$$

$$\sigma_t^2 = \frac{\sum t_i^2 \cdot c_{T,i}}{\sum c_{T,i}} - \left(\frac{\sum t_i \cdot c_{T,i}}{\sum c_{T,i}}\right)^2$$

$\sigma_t^2$ die Varianz der Messreihe ist. Sie lässt sich durch                                                   berechnen.

In der Tabelle ist ein Rechenbeispiel gezeigt, und zwar die Werte für Wasserstoff bei einem Wechsel von Argon auf den Mix01, V˙ = 1 l/min, T = 350 ° C

1) Berechnung von $\sigma_t^2$ :

2) Berechnung von $\bar{t}$

$$\bar{t} = \sum_0^t E(t) \cdot t \cdot \Delta t = 9{,}74\,s$$

3) Berechnung von $\sigma^2$:

$$\sigma^2 = \frac{0{,}92\,s^2}{(9{,}74\,s)^2} = 9{,}66 \cdot 10^{-3}$$

4) Berechnung der Bodenstein-Zahl:

$$Bo \approx \frac{2}{9{,}66 \cdot 10^{-3}} = 207{,}09$$

Vorzugsweise wird das Verfahren zur Untersuchung von Feststoffen dazu eingesetzt, um das Verhalten von Katalysatoren in der Gegenwart von Reaktivfluiden zu untersuchen. Das Verfahren dient der Charakterisierung der Katalysatoren und/oder der Verbesserung von Prozessbedingungen. Das erfindungsgemäße Verfahren bezieht sich auf unterschiedliche Anwendungsgebiete im Bereich der heterogenen Katalyse, die für industrielle Prozesse von großer Bedeutung sind. Der Begriff Reaktivfluide bedeutet, dass hierbei auch flüssige Fluide umfasst sein können.

Bei dem Verfahren ist es bevorzugt, dass es sich zumindest bei einem der zwei oder mehr Fluide um ein Reaktivfluid handelt und wobei das Verfahren zumindest eine Reaktion umfasst, die aus der nachfolgend genannten Gruppe ausgewählt ist: Oxidationsreaktion, Hydrierungsreaktion, Hydratisierungs-reaktion, Homologisierungreaktion, Kondensations-reaktion, Metathesereaktion, Fischer-Tropsch-Synthese, Methanisierung von CO, Ammoniaksynthese, Ammoniakoxidation, Selektivreduktion von NO, Hydrogenolyse von Ethane, Methanolsynthese, Benzolhydrierung, oxidative Kupplung von Methan, NO/CO Reduktion, CO Oxidation, Selektivoxidation von Propan, Selektivoxidation von Butan, Isobutan-Hydrierung, Vinylacetatsynthese, Hydroformylierung von Ethen.

In einer bevorzugten Ausführungsform ist das Verfahren zur Untersuchung von Feststoffen dadurch gekennzeichnet, das Reaktivfluid einen oder mehrere Reaktanden aus der Gruppe $N_2$, $H_2$, $O_2$, $H_2O$, CO, $CO_2$, Alkane, Alkene, Alkohole, Aromaten, Alkane, Aromaten mit Heteroatomen aus der Gruppe N, O, S umfasst, vorzugsweise betrifft das Verfahren eine ausgewählte Reaktion in Verbindung mit zwei oder mehr unterschiedlichen Reaktivfluiden, vorzugsweise liegen die zumindest zwei unterschiedliche Reaktivfluide als Paar aus markiertem und nicht markiertem Reaktivfluid vor, Markierung bedeutet Isotopenmarkierung und/oder Markierung mit radioaktiven Elementen, vorzugsweise unterscheiden sich zwei Reaktivfluide durch eine Isotopenmarkierung, wobei diese vorzugweise dadurch gekennzeichnet ist, dass Atome, Gruppen von Komponenten oder Komponenten durch Isotope getauscht sind, vorzugsweise sind die Isotopen ausgewählt aus der Gruppe vorzugweise aus der Gruppe D, $^{13}C$, $^{14}C$, $^{15}N$, $^{17}O$, $^{18}O$, $^{32}P$, die zumindest eine markierte organische Komponente aus der Alkane, Alkene, Alkohole, Aromaten, Alkane und/und Aromaten mit Heteroatomen aus der Gruppe N, O, S, oder auch Komponenten aus der Gruppe $D_2$, HD, $^{18}O^{16}O$, $^{18}O_2$, $H_2^{18}O$, $D_2O$, $^{13}CO$, $C^{18}O$, $^{15}N_2$, $^{14}N^{15}N$ umfassen.

In einer weiteren Ausführungsform des Verfahrens weist der eingesetzte Feststoff, bei dem es sich vorzugsweise um einen Katalysator handelt, eine Isotopenmarkierung auf und/oder das erfindungsgemäße Verfahren umfasst einen weiteren Schritt, bei dem der Feststoff mit einer Isotopenmarkierung versehen wird, damit das erfindungsgemäße Verfahren mit einem Katalysator durchgeführt wird, dessen Oberfläche zumindest teilweise mit Isotopen markiert ist. Vorzugsweise sind die auf der Oberfläche befindlichen Isotopen ausgewählt aus der Gruppe D, $^{18}O$, $^{15}N$. Beim Isotopenaustausch auf der Oberfläche des Katalysators handelt es sich um einen intrinsischen Effekt, der bei der Durchführung des Verfahrens in Erscheinung treten kann. In der vorliegenden Abwandlung des Verfahrens wird der Effekt jedoch gezielt dazu verwendet, um das Verfahren in Verbindung mit der Durchführung von bestimmten Reaktionen noch weiter zu optimieren. Als Beispiel wird hierbei auf literaturbekannte Effekte verwiesen, wie Sauerstoff-Aktivierung, die durch den Mars-van-Krevelen Mechanismus beschrieben werden kann, wobei ein Austausch von Bulksauerstoff des Feststoffes mit der Gasphase auftritt.

Es ist bevorzugt, dass das Verfahren bei einem Druck im Bereich von 0,01 - 300 barg, vorzugsweise bei einem Druck im Bereich von 0,1 - 250 barg, weiter vorzugsweise bei einem Druck im Bereich von 1 - 210 barg durchgeführt wird, darüber hinaus bevorzug betrifft das Verfahren ein Hochdruckverfahren, das bei einem Druck im Bereich von 10 - 250 barg, vorzugsweise bei einem Druck im Bereich von 15 - 210 barg, durchgeführt wird, wobei das Verfahren vorzugsweise ohne Druckschwankungen beziehungsweise frei von Druckstößen erfolgt, wobei die Druckschwankungen von Delta-P in Bezug auf den Gesamtdruck P beim Fluidwechsel $\leqq 1$ %, vorzugsweise $\leqq 0{,}5$ %, weiter vorzugsweise ≦ 0,1 %, darüber hinaus bevorzugt ≦ 0,05 % sind. Die Angabe von Druckschwankungen beziehungsweise Druckstößen bezieht sich auf Druckschwankungen oder Druckstöße, die im Reaktionsraum auftreten.

Vorzugsweise wird das Verfahren bei einer Temperatur im Bereich von - 20 bis 1200°C, vorzugsweise - 10 bis 950 °C, weiter vorzugsweise bei 0 bis 850 °durchgeführt, vorzugsweise liegt der durch die Durchflusszelle geleitete Fluidstrom als Gas vor und weist eine Raumzeitgeschwindigkeit auf, die im Bereich von 150 - 300.000 h$^{-1}$ liegt, weiter vorzugsweise im Bereich von 300 - 100.000 h$^{-1}$, darüber hinaus bevorzugt im Bereich von 500 - 10.000 h$^{-1}$, weiter vorzugsweise wird das Verfahren mehrmals durchgeführt, wobei die Wiederholungen mit zumindest einem abgeänderten Parameter aus der Gruppe Temperatur, Druck, Gaslast durchgeführt werden, noch weiter vorzugsweise werden eine Vielzahl von Wiederholungen durchgeführt, um eine Vielzahl von Werten für die Parameter aus der Gruppe Temperatur, Druck, Gaslast zu generieren, weiter vorzugsweise wird das Verfahren zur Bestimmung von transienter Kinetiken von Reaktionen an Feststoffkatalysatoren verwendet.

Ein für die Erfindung wichtiger Aspekt betrifft die Kopplung der erfindungsgemäßen Vorrichtung mit den Analyseneinheit, bei denen es sich dann um online-Analyseneinheiten handelt, die die jeweiligen Produktfluidströme mit hoher Genauigkeit und in kurzen Zeitabständen analysieren.

Als Online-Analyseneinheiten eingesetzt werden Gaschromatographen, IR-Spektrometer, FTIR-Spektrometer, Raman-Spektrometer, FT-Raman-Spektrometer, UV-Spektrometer, UV/VIS-Spektrometer, Massenspektrometer. Die Gaschromatographen können mit unterschiedlichen Detektoren ausgestattet sein, beispielsweise FID, TCR, Massenspektrometer. Möglich ist auch, dass unterschiedliche Online-Analyseeinheiten miteinander gekoppelt vorliegen, beispielsweise ein Online-GC und ein Online-FTIR. Durch die Kopplung können Datenpunkte mittels des Online-FTIR mit einer hohen Frequenz aufgezeichnet werden, die dann mit GC-Daten korreliert werden. Die Beschleunigung der der Durchführung von analytischen Charakterisierungsuntersuchungen ist von Interesse, wenn Kinetik-Untersuchungen durchgeführt werden, bei denen die Reaktionsprozessen und Änderungen im Zeitbereich von Sekunden liegen. Gleichzeitig besteht ein Interesse an schnellen Charakterisierungsmethoden, wenn die erfindungsgemäße Vorrichtung mit einer Vielzahl von Reaktionsräumen ausgestattet ist, die parallel angeordnet sind.

Vorzugsweise umfasst die eingesetzte online-Analyseneinheit eine Einheit die aus der nachfolgend genannten Gruppe ausgewählt ist: Massenspektrometrie, IR, FTIR, Raman, UV, UV-VIS, GC, GC-MS, Elektronen-Spinresonanz, NMR, Ionen-Mobilität-Spektroskopie (IMS), Elektronenmikroskopie (SEM/TEM), wobei auch unterschiedlichen online-Analyseneinheiten gekoppelt vorliegen, bevorzugt eingesetzt wird eine online-Analyseneinheit aus der Gruppe Massenspektrometrie, IR, FTIR, Raman.

Beim Vorliegen einer Vielzahl von Reaktionsräumen ist eine Ausführungsform bevorzugt, bei der mehrere Online-Analyseneinheiten gleichzeitig vorhanden sind, da die analytische Charakterisierung von Produktfluidströmen parallel oder zumindest teilweise parallel durchgeführt werden kann. Vorzugsweise werden GC-Methoden eingesetzt, deren Analysenzeiten im Bereich von 10 Minuten pro Chromatogramm liegen. Bei FTIRspektroskopischen Analysen kann die Messzeit pro Spektrum im Bereich von 0,5 - 60 Sekunden. Der Fachmann ist in der Lage, die Online-Analyseneinheiten so auszuwählen, dass sich diese jeweils für die Durchführung der jeweils ausgewählten Verfahren eignet.

Es ist bevorzugt, dass der Messsensor der online-Analyseneinheit oder die Probenentnahmestelle der online-Analyseneinheit in einem Bereich der Leitung angeordnet ist, in dem ein Druck herrscht, der kleiner oder gleich 5 bara ist. Sofern die bei dem Verfahren auftretende Produktfluide unter einem hohen Druck stehen, so kann der Analyseneinheit eine Teilleitung vorgeschaltet sein, die ein Drosselelement aufweist, so dass die Messsensoren im Niederdruckbereich positioniert sind.

Ebenso ist es bei dem Verfahren bevorzugt, dass die gemäß des Schritts (ii) vorgenommene analytische Charakterisierung in Zeitabständen von einer Analyse pro zehn Minuten vorgenommen, vorzugsweise einer Analyse pro Minute, weiter vorzugsweise fünf Analysen pro Minute, insbesondere vorzugsweise 10 Analysen pro Minute, darüber hinaus bevorzugt 30 Analysen pro Minute, darüber noch weiter bevorzug 400 Analysen pro Minute. Eine derartig hohe Analysendichte kann beispielsweise mittels eine Massenspektrometers (MS) erzielt werden, bei dem die Auflösung bei 150ms/amu liegt. Die Angabe amu bedeutet atomic mass units, wobei es sich um eine relative Angabe von Atomgewichten handelt, die sich auf das $^{18}$O-Isotop als Einheit bezieht.

Weiterhin betrifft die Erfindung auch ein Computerprogramm auf einem Datenträger zur Durchführung des erfindungsgemäßen Verfahrens und zum Betrieb der erfindungsgemäßen Vorrichtung , wobei das Computerprogramm eine Bewertung der Daten umfasst, die bei der Analyse bestimmt werden, die Daten in einer Datenbank abgelegt werden, das Computerprogramm in der Lage ist, die Daten in Korrelationen zu verwenden.

Unterschiedliche Ausgestaltungen der erfindungsgemäßen Vorrichtungen sind in den Figuren 1 - 6 dargestellt. Den Figuren 1 und 2 lässt sich entnehmen, dass die erfindungsgemäße Vorrichtung mit einer einzelnen Durchflusszelle (33) betrieben werden kann. In weiteren Ausführungsformen kann die erfindungsgemäße Vorrichtung auch mit einer Vielzahl von Durchflusszellen ausgestattet sein, wobei in den Figuren 3 - 6 unterschiedliche Ausführungsformen von Vorrichtungen gezeigt werden, die jeweils drei Durchflusszellen (33', 33", 33''') aufweisen. Dabei wird hervorgehoben, dass die Parallelisierung der erfindungsgemäßen Vorrichtung auch die Möglichkeit eröffnet, diese in unterschiedlichen abgewandelten Formen auszugestalten. In den Figuren 3 und 4 ist die erfindungsgemäße Vorrichtung in Kombination mit der Bypassleitung (61) gezeigt. Im Gegensatz hierzu sind in den Figuren 5 und 6 Ausführungen gezeigt, in denen die Bypassleitung (61) durch eine anders aufgebaute Ventilschaltung in Verbindung mit der Bypassleitung über eine Durchflusszelle ersetzt wird.

Beispiele

Zur Illustration der erfindungsgemäßen Vorrichtung und des erfindungsgemäßen Verfahrens wurden beispielhaft mehrere Experimente zur Synthese von Ammoniak durchgeführt. Die Experimente wurden mit einer Vorrichtung durchgeführt, die den schematischen Aufbau aufweist, der Fig. 1 dargestellt ist, wobei die Ableitung der Vorrichtung mit einem Massenspektrometer (Firma Hiden, Modell HPR20) mit einem SEM-Detektor verbunden war. Die Analysenleitung war mit einer Restriktionskapillare ausgestattet. Zunächst wurde ein Ru-basierter Katalysator, der auf einem MgO geträgert vorlag, einen Rohrreaktor eingebracht. Dabei wurden a. 0,55 g der Split-Fraktion von 150-215 $\mu$m mit einer Unter- und Oberschüttung aus SiC in einem Rohrreaktor eingebracht, der eine Länge von 300 mm und einen Innendurchmesser 2,95 mm aufwies. Der befüllte Rohrreaktor wurde im Ofenraum einer Vorrichtung positioniert und mit dem Leitungssystem verbunden.

Für die Durchführung der Untersuchung wurden unterschiedliche vorgemischte gasförmige Fluide bereitgestellt, und zwar ein Fluid mit Stickstoff und Wasserstoff, ein Fluid mit Stickstoff und Deuterium sowie ein Intertgasfluid.

Jede Zuleitung beziehungsweise jeder Fluidkanal der Vorrichtung war mit einem Durchflussregler (MFC) ausgestattet, wobei Fluide mit einem Massenfluss im Bereich von 100 - 10000 mL/min in den Reaktor geleitet werden konnten. Der Reaktor konnte bei Temperaturen im Bereich von 20 und 500 °C geheizt werden und bei der Durchführung konnte der Dosierung konnte bei konstantem Druck vorgenommen werden, wobei der Druck so gewählt werden konnte, dass diese in einem Bereich von 1 - 60 barg lag. Durch eine Schaltung der Ventile wurde zwischen den einzelnen Fluidmischungen und einem Inertgas (Ar) gewechselt oder zwischen unterschiedlichen Reaktivgasen, die in den mit Katalysator befüllten Rohreaktor eingeleitet wurden. Die nicht verwendeten Gasströme wurde von den Schaltventilen ausgehend über eine Bypassleitung zur Ableitung geführt, die dem Reaktor nachgeschaltet war und in der ein Druckregler angeordnet war. Somit wurden der Druck in Reaktor und der Druck in der Bypassleitung durch einen gemeinsamen Druckregler gesteuert beziehungsweise geregelt. Die Charakterisierung des Produktfluidstroms wurde mittels des Massenspektrometers durchgeführt. Zur Analyse der gebildeten Produkte wurde ein Massenspektrometer (Hiden HPR20) mit einem SEM-Detektor eingesetzt.

I. Beispiele B1 -B3

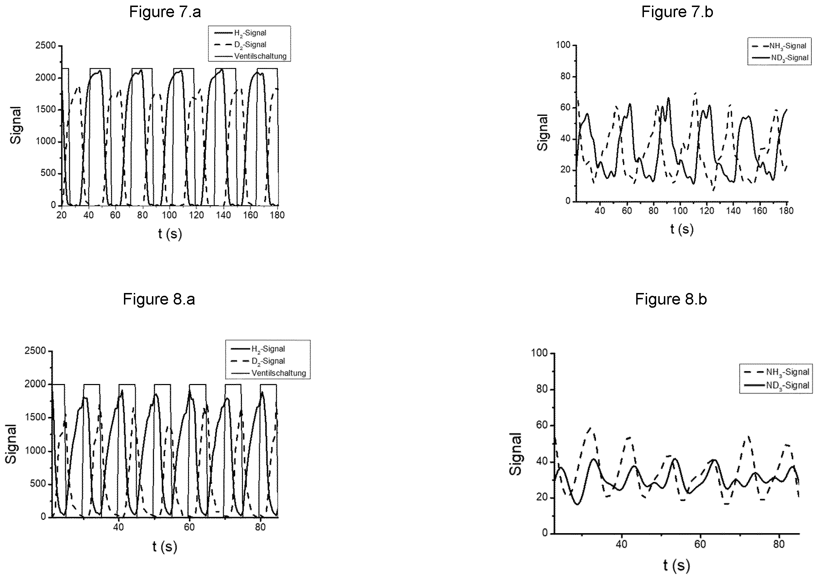

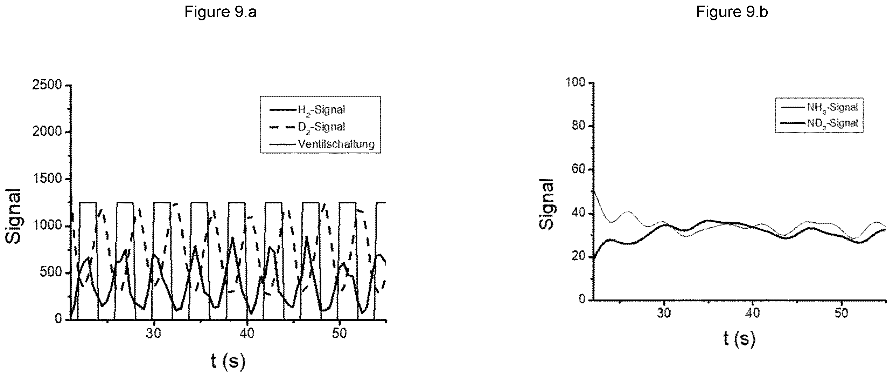

In den Beispielen B1 - B3 wurden Pulsdosierexperimente durchgeführt, bei denen die Pulsfrequenz variiert wurde. In Beispiel 1 lag die Pulsfrequenz bei 4 Pulsen pro Minute, in Beispiel 2 lag die Pulsfrequenz bei 12 Pulsen pro Minute und in Beispiel B3 lag die Pulsfrequenz bei 30 Pulsen pro Minute. Die Dauer eines Beispiels lag jeweils im Bereich von 2 - 3 Minuten, wobei die Anzahl der Gesamtpulse bei 10, 23 und 46 lag. Anzahl der Gesamtpulse resultiert aus der Summe an Pulsen von Fluid 1 und Fluid 2 pro Beispiel. Beim ersten Fluid handelte es sich um ein Gemisch aus $N_2$ und $H_2$ (und zwar im molaren Verhältnis von 3 : 1), beim zweiten Fluid handelte es sich um $N_2$ und $D_2$ (und zwar im molaren Verhältnis von 3 : 1). In den Beispielen B1 - B3 wurde das Verfahren bei 60 bara, einer GHSV von 1.600 h$^{-1}$ und einer Temperatur von 370 °C durchgeführt. Die Ergebnisse der differentiellen Untersuchungen der Produktluidströme sind in den Figuren 7.a und 7.b für Beispiel B1, Figuren 8.a und 8.b für Beispiel B2 und Figuren 9.a und 9.b für Beispiel B3 dargestellt. Die Produktstromzusammensetzung ist in Counts angeben. In Bezug auf das MS ist festzustellen, dass das MS als primäre Information einen Strom liefert. Die Zuordnung des gemessenen Stroms zu einer Konzentration erfolgt über eine Kalibrierung. Ohne die Durchführung einer Kalibrierung, liefert das MS eine relative Information. Die Auswertung der hier beschriebenen Versuche erfolgte, indem das Ausgangssignal auf das Eingangssignal normiert wird. In diesem Zusammenhang muss nur gefordert werden, dass die Kalibrierung zeitlich konstant ist.

In den Figuren 7.a, 8.a, 9.a sind jeweils die Durchbruchskurven von Wasserstoff und Deuterium zu sehen, die im Produktfluidstrom als Funktion der Zeit gemessen werden.

Die Durchbruchskurven kennzeichnen die Menge an nicht umgesetztem Reaktivkomponenten. Gleichzeitig wurden die Produktfluidstrom auch die Menge an Ammoniak und deuteriertem Ammoniak bestimmt, wobei die Ergebnisse in den Figuren 7.b, 8.b, 9.b. Die Daten wurden in drei beispielhaft durchgeführten Untersuchungen aufgenommen. Es ist ersichtlich, dass immer jeweils die Figuren 7.a und 7.b bei der gleichen Untersuchung aufgezeichnet wurden. Die Fluide wurden hier im Wechsel bei einem Wechsel von 15 Sekunde dosiert. Genauso gehören die Figuren 8.a und 8.b zu einer Untersuchung, bei dem die Fluide im Wechsel dosiert wurden, wobei de Wechsel im Takt von 5 Sekunden erfolgte. In den Figuren 9.a. und 9.b. erfolgte der Wechsel im Takt von 2 Sekunden.

Bei den Pulswechseln, die in einem relativ langen Zeitraum von 15 Sekunden erfolgen, ist zu erkennen, dass die beiden unterschiedlichen Produkte Ammoniak mit Wasserstoff und Ammoniak mit Deuterium im Wechsel gebildet werden. Zu erkennen ist ein wellenförmiger beziehungsweise ein bergiger Verlauf, der beiden Produktkurven in Fig.

7.b. gestrichelte Kurve zeigt das Signal für den Ammoniak mit Wasserstoff und die durchgezogene Kurve zeigt das Signal für Ammoniak mit Deuterium. Die durchgezogene Kurve zeigt an mehreren Stellen eine Art Doppelspitze.

Darüber hinaus ist in der Figur 9.b zu erkennen, dass das System eine Art Einschwingverhalten aufweist. Zunächst in der Zeitdauer von 0 bis 30 Sekunden ist das Signal für die Bildung von Ammoniak mit Wasserstoff stärker als das Signal von Ammoniak mit Deuterium. Nach dieser Einschwingphase werden dann ähnliche Mengen an Ammoniak mit Wasserstoff und Ammoniak mit Deuterium im Produktfluidstrom bestimmt. Die Wechsel der zu dosierten Fluide erfolgen in so kurzen Zeiträumen, dass diese Wechsel schneller sind als die Anpassung des Feststoffkatalysators, der in der Durchflusszelle angeordnet ist.

Zu erkennen ist, dass die Daten eine extrem hohe Genauigkeit aufweisen und die Daten gleichzeitig bei der Durchführung des Verfahrens ein sehr hoher Druck im Reaktionsraum vorgelegen hatte, und zwar in der Höhe von 60 bara. Störungen durch Druckschwankungen beim Schaltprozess und bei der Dosierung der Fluide konnten somit sehr effizient unterdrückt werden, so dass die Daten, die bei der online-analytischen Charakterisierung des Systems ermittelt wurden, dem Verfahren und dem katalytischen Prozess zugeordnet werden können, der mit dem untersuchten Feststoff zusammenhängt.

In der Figur 8.b ist zu erkennen, dass das Produktsignal für Ammoniak mit Wasserstoff etwas höher ist als das Signal für Ammoniak mit Deuterium.

Die mittlere Verweilzeit des Fluidstromes im Reaktor lag bei etwa 5,5 Sekunden. Die für die Beispiele B1 bis B3 erzielten Messdaten zeigen, dass eine klare Differenzierung zwischen den unterschiedlichen kinetischen Prozessen möglich ist, die mit der Bildung von Ammoniak oder die mit der Bildung von deuteriertem Ammoniak verbunden sind. In Beispiel B1 und B2 sind die Signale der Eduktfluide $H_2$ und $N_2$ klar Basislinien getrennt, wohingegen die Signale der Produkte Ammoniak und deuterierter Ammoniak bereits nicht mehr Basislinien separiert sind und relativ zum Eingangssignal unterschiedliche Verschiebungen aufweisen. Die spezifische signifikante Verschiebung der Maxima der Produktsignale von Ammoniak und deuteriertem Ammoniak in Bezug auf die Edukte Wasserstoff und Deuterium kann auf den kinetischen Isotopeneffekt zurückgeführt werden.

Das Eingangssignal der Eduktfluide $H_2$ und $N_2$ weist eine rechteckige Form auf, was dem Schaltsignal entspricht. Die Signalprofile der Produktfluide Ammoniak und des deuterierten Ammoniak weisen Sägezahnprofile mit unterschiedlicher Asymmetrie auf. Das Signal des Ammoniaks steigt zunächst langsam an und fällt dann schnell. Der schnelle Abfall des Ammoniaksignals ist korreliert mit der Bildung von deuteriertem Ammoniak. Das Signal des deuterierten Ammoniaks weist ein umgekehrtes Sägezahnprofil mit einem schnellen Anstieg gefolgt von einem langsamen Abfall des Signals auf.

Diese Messdaten zeigen, dass die Bildung des deuterierten Ammoniak ($ND_3$) gegenüber Ammoniak ($NH_3$) bevorzugt erfolgt. Eine Erklärung dafür ist, dass sich erst dann $NH_3$, bildet, wenn die Konzentration von Deuterium in der Katalysatorpore unterhalb eines kritische Partialdruckes fällt.

Zu erkennen ist, dass bei der Bildung von Ammoniak bei einer Pulsfrequenz von 4 Pulsen pro Minute die makrokinetischen Transporteffekte sichtbar gemacht werden können. In den Beispielen B1 bis B3 wurde die Pulsdauer schrittweise verkürzt, sodass diese bei einer Pulsfrequenz von 30 Pulsen pro Minute unter der mittleren Verweilzeit im Katalysatorbett lag. Die Signale der Produkte Ammoniak und des deuterierten Ammoniaks sind mit steigender Pulsfrequenz nicht mehr Basislinien-getrennt und erreichen keine Nullkonzentration mehr im zeitlichen Verlauf. Dieser Effekt wird so interpretiert, dass in Beispiel B3 eine Pulsfrequenz erreicht ist, bei der der diffusive Austausch über Katalysatorfilm und über das Katalysatorporensystem im Vergleich zum Gasaustausch durch die Gaspulse über das Katalysatorbett langsam wird. Es ist davon auszugehen, dass sich Deuterium und Wasserstoff in gleicher Konzentration in Film und Pore akkumulieren, da nahezu die gleiche Konzentration von Ammoniak und deuteriertem Ammoniak gemessen wird.

II. Vergleichsbeispiele

Mittels der erfindungsgemäßen Vorrichtung wurden mehrere Vergleichsbeispiele zur Synthese von Ammoniak durchgeführt, die darauf ausgerichtet waren, dass sich in Bezug auf die Bildung von Ammoniak im Produktfluidstrom ein stationäres Gleichgewicht einstellte. Die Versuche wurden bei 60 bara durchgeführt, wobei die Versuche in zwei Versuchsreihen mit unterschiedlichen Reaktivfluiden jeweils unter Veränderung von der Temperatur und der GHSV durchgeführt wurden. In einer Serie von Versuchen wurde als Reaktivfluid ein Gemisch aus Stickstoff und Wasserstoff eingesetzt und in einer Serie von Versuchen wurde als Reaktivfluid ein Gemisch aus Stickstoff und Deuterium eingesetzt. Die Temperatur wurde im Bereich von 360 °C bis 490 °C variiert und die GHSV wurde im Bereich von 180 - 9.000 $h^{-1}$ variiert.

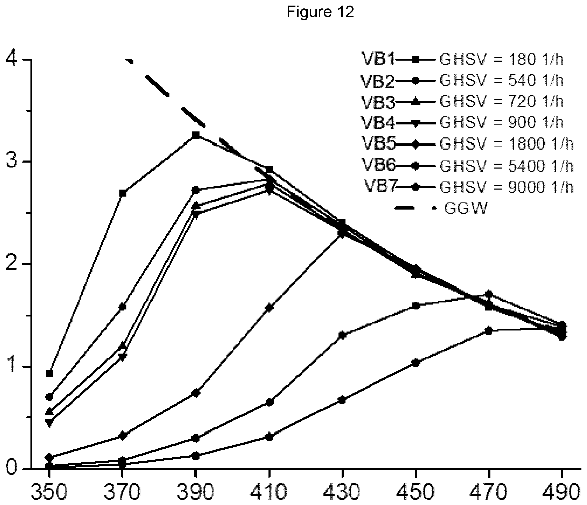

Die in den Vergleichsbeispielen gemessenen Ammoniakausbeute-Kurven werden als VB1 - VB7 bezeichnet, wobei sich jedes einzelnes Vergleichsbeispiel auf die Ammoniaksynthese mit einer ausgewählten GHSV-Last durchgeführt wurde. In Figur 12 ist zu erkenne, dass die AmmoniakAusbeute als Funktion der Temperatur ansteigt und dann auf einen Gleichgewichtswert hin zuläuft. In der Figur 12 ist auch die Gleichgewichtskurve aufgetragen, die an die einzelnen Messkurven angepasst wurde (siehe Figur 12 Gleichgewichtskurve bzw.GGW). Mit zunehmender GHSV sinkt die Ausbeute an Ammoniak bei gleicher Temperatur durch die kürzere Verweilzeit im Katalysatorbett und die Gleichgewichtsausbeute wird erst bei höheren Temperaturen erreicht. Der Vergleich der Beispiele VB2 - VB4 zeigt, dass auch kleine Unterschiede in der GHSV klar aufgelöst werden können. Aus den stationären Messungen für unterschiedliche Bedingungen lassen sich somit optimale Bedingungen für transiente Experimente unter kinetischer Reaktionskontrolle ermitteln.

III. Weiteres Beispielexperiment

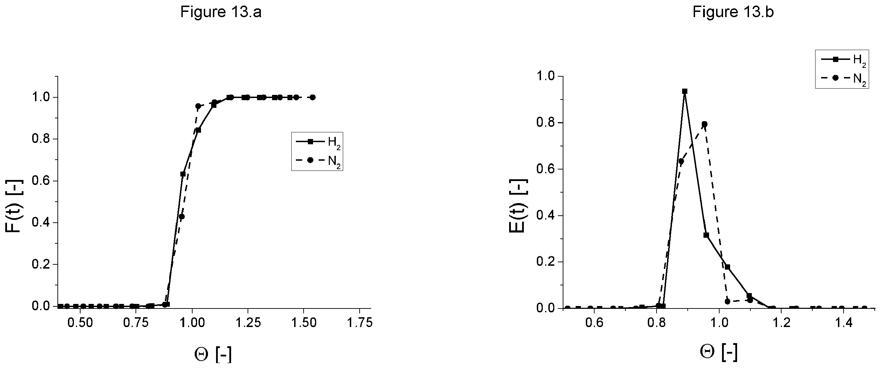

Beispielexperiment zur Illustration der Funktionseigenschaften der erfindungsgemäßen Vorrichtung. In einem weiteren Beispiel wurde zunächst Argon bei einem Druck von 60 bara durch den mit Katalysator befüllten Reaktor geleitet und der erfindungsgemäßen Vorrichtung geleitet und anschließend erfolgte ein pulsförmiger Wechsel auf ein Gemisch aus Wasserstoff und Stickstoff, so dass der Argonstrom nach dem Wechsel über die Bypassleitung geführt wurde. Der aus der Ausgangsleitung austretende Produktfluidstrom wurde in Abhängigkeit von der Strömungszeit analysiert, wobei das Ergebnis dieser Analysen in der Fig. 13 dargestellt ist. In Fig. 13 ist der sprungförmige Anstieg des Signals zu erkennen, das für die Moleküle Wasserstoff und Stickstoff in der Ausgangsleitung des Reaktors mittels des Massenspektrometers (und zwar Hiden HPR20) gemessen wurde. Zu erkennen ist, dass beiden eingeleiteten Moleküle (d.h. sowohl Stickstoff als auch Wasserstoff) einen sehr starken nahezu rechtecks-förmigen Anstieg im austretenden Fluidstrom zeigen.

Die Verweilzeitsummenfunktion (Fig. 13a) und die die Verweilzeitdichtefunktion (Fig. 13b) zeigen, dass die Verbreiterung des Signals sehr gering ist. Über die Varianzmethode lassen sich aus den Verweilzeitkurven Bodensteinzahlen ermitteln. Die aus den ermittelten Daten erhaltenen Bodensteinzahlen liegen bei Bo > 300. Damit weist die erfindungsgemäße Vorrichtung kaum Rückvermischung auf und kann näherungsweise als ideales Strömungsrohr betrachtet und beschrieben werden. Weiterhin zeigt dies, dass mittels der erfindungsgemäßen Vorrichtung und dem erfindungsgemäßen Verfahren die Störeffekte, die in Verbindung mit Dispersions- und Rückvermischungseffekten stehen, gering gehalten werden können.

Beispiele A - H für Einleiten von zwei Fluiden im Wechsel in pulsartiger Form.

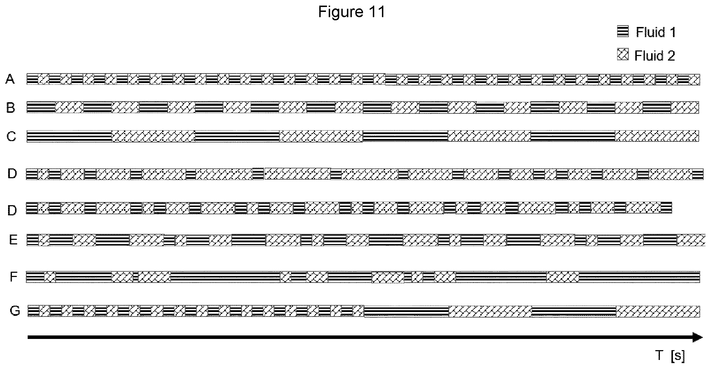

In Fig. 11 ist eine schematische Darstellung der pulsartigen Zuführung von zwei unterschiedlichen Fluiden in eine Durchflusszelle gezeigt, wobei die zeitliche Abfolge der Pulse verändert wird. Es werden acht unterschiedliche Beispiele A - H für eine pulsartige Zuführung der Fluide 1 und 2 gezeigt, die abwechselnd in die Durchflusszelle eingeleitet werden.

In Beispiel A betragen die Pulsdauer von Fluid 1 und Fluid 2 jeweils 2 Sekunden, in Beispiel B jeweils 5 Sekunden und in Beispiel C jeweils 15 Sekunden.

Im Beispiel D ist die Pulsdauer von Fluid 1 konstant und beträgt jeweils 2 Sekunden, wohingegen Fluid 2 eine Modulation aufweist, die von 2 Sekunden auf 12 Sekunden ansteigt und danach wieder abfällt, wobei die Zu- und Abnahme der Pulsdauer jeweils 2 Sekunden beträgt. Die in Beispiel D gezeigte Modulation kann auch als sinus-förmige Pulsmodulation bezeichnet werden. In Beispiel E wird eine sägezahnförmige Pulsmodulation gezeigt, die die Zuführung von Fluid 2 betrifft. Fluid 1 wird mit einer Pulsdauer von 2 Sekunden dosiert und Fluid 2 wird stufenweise mit einer Pulsdauer von 2, 4 und 6 Sekunden dosiert. In Beispiel F wird eine sägezahnförmige Pulsmodulation gezeigt, die sich sowohl auf die Zuführung von Fluid 1 als auch auf die Zuführung von Fluid 2 bezieht.

In Beispiel G wird Fluid 2 mit einer periodischen Pulsdauer von 2, 4 und 6 Sekunden in die Durchflusszelle zugeführt, wohingegen die Pulsdauer von Fluid 1 keine feste Pulsdauer aufweist. Im Beispiel H umfasst eine erste Dosierphase, die der zeitlichen Abfolge in Beispiel A entspricht, und eine zweite Dosierphase, die der zeitlichen Abfolge in Beispiel C entspricht.

In den experimentellen Beispielen B1 - B3 werden die Synthese von Ammoniak in Gegenwart von zwei Fluiden dargestellt, die im Wechsel in den Rohrreaktor dosiert werden. Hierbei erfolgte die Zuführung der Pulse der Fluide gemäß der Darstellung, die in den Beispielen A bis C gezeigt ist.

Tabellarische Übersicht zur Angabe der Pulsfrequenz für unterschiedliche Pulse für den Fall, dass die Pulsdauer von Fluid 1 und Fluid 2 gleich ist.

| Pulsdauer je von Fluid 1 und Fluid 2 [Sekunden] | Pulsfrequenz* [pro Minute] | Pulsfrequenz* [pro Sekunde] | **Pulsfrequenz in [Hz] bzw. [mHz]** |
|---|---|---|---|
| 0,25 | 240 | 4 | **4 Hz** |
| 0,5 | 120 | 2 | **2 Hz** |
| 1 | 60 | 1 | **1 Hz** |
| 2 | 30 | 0,5 | **0,5 Hz** |
| 5 | 12 | 0,2 | **0,2 Hz** |

(fortgesetzt)

| Pulsdauer je von Fluid 1 und Fluid 2 [Sekunden] | Pulsfrequenz* [pro Minute] | Pulsfrequenz* [pro Sekunde] | **Pulsfrequenz in [Hz] bzw. [mHz]** |
|---|---|---|---|
| 15 | 4 | 0,0667 | **66,7 mHz** |
| 60 | 1 | 0,01667 | **16,67 mHz** |
| 300 | 0,2 | 0,00333 | **3,33 mHz** |
| 600 | 0,1 | 0,00167 | **1,67 mHz** |
| 1200 | 0,05 | 0,000833 | **0,83 mHz** |

<u>Kurze Beschreibung der Figuren:</u>

Fig. 1 zeigt eine schematische Darstellung einer Ausführungsform der erfindungsgemäßen Vorrichtung, bei der der Rohrreaktor mit einer Zuführungsleitung verbunden ist, die mit vier Fluidversorgungseinheiten ausgestattet ist, wobei eine Fluidversorgungseinheit eine Trägerfluidversorgung darstellt. Die Ausgangsleitung steht in Wirkverbindung mit Analysenleitung und Druckregler, wobei die Schaltventile von drei Fluidkanälen mit einer Bypassleitung an die Ausgangsleitung angeschlossen sind.

Fig. 2 zeigt eine schematische Darstellung einer Ausführungsform, die der Ausführungsform entspricht, die in Fig. 1 dargestellt ist, wobei jedoch der in der Ausgangsleitung angeordnete Druckregler in Form eines Membrandruckventils vorliegt, dessen Domdruckregler mit der Trägerfluidleitung verbunden ist. Darüber hinaus ist die Analyseneinheit schematisch dargestellt, die mit der Ausgangsleitung durch eine Seitenleitung verbunden ist, welche ein Restriktorelement aufweist.

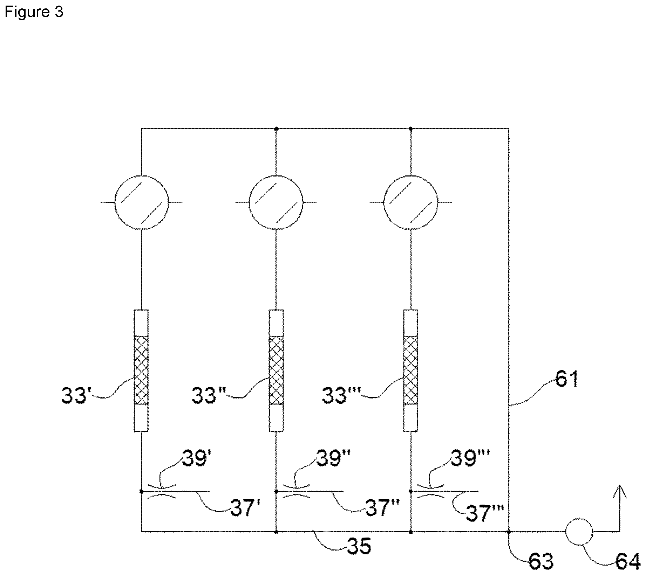

Fig. 3 zeigt eine schematische Darstellung einer Ausführungsform der erfindungsgemäßen Vorrichtung, die mit drei Durchflusszellen ausgestattet ist, wobei die Schaltventile der Fluidkanäle als Vierkanalschaltventile ausgestaltet sind und diese so konfiguriert sind, dass der Strom wahlweise durch die Durchflusszelle oder durch die Bypassleitung geleitet werden kann. Die Bypassleitung ist mit dem gemeinsamen Ausgangsleitung verbunden, die an ein gemeinsames Druckregelventil angeschlossen ist.

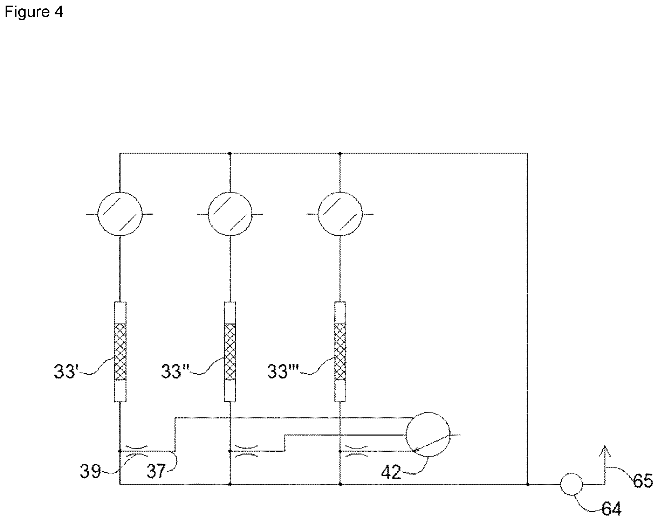

Fig. 4 zeigt eine schematische Darstellung einer Ausführungsform der erfindungsgemäßen Vorrichtung, die Figur 3 dargestellt ist und die auch drei Durchflusszellen aufweist. Die Ausgangsleitungen der einzelnen Durchflusszellen führen zu einer gemeinsamen Ausgangsleitung, die mit der Bypassleitung und dem Druckregelventil verbunden ist. Die einzelnen Ausgangsleitungen der Durchflusszellen weisen Analysenleitungen auf, die zu einem Multiportventil führen.

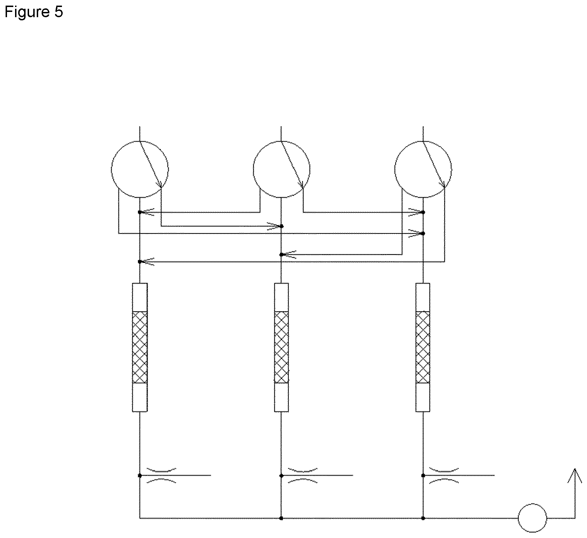

Fig. 5 zeigt eine schematische Darstellung einer Ausführungsform der erfindungsgemäßen Vorrichtung, die mit einer Pluralität von drei Durchflusszellen ausgestaltet ist. Die Schaltventile, die mit den Fluidkanälen verbunden sind und die zur Zuleitung der Durchflusszellen führen, sind auch mit den benachbarten Durchflusszellen verbunden. Durch die Verschaltung ist es möglich, die Bypassleitung durch eine Durchflusszelle zu substituieren. Da die Durchflusszellen zu der gemeinsamen Ableitung führen, in dem der Druckregler angeordnet sind, können durch die Umschaltung auf die Durchflusszelle auch Druckbedingungen konstant gehalten werden.

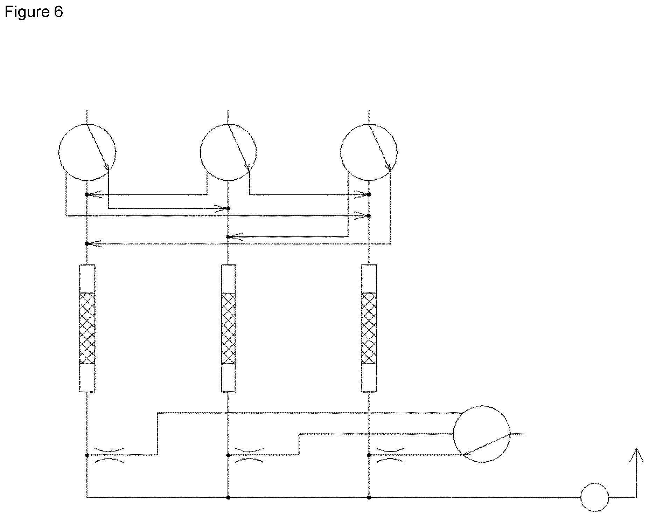

Fig. 6 zeigt eine schematische Darstellung einer Ausführungsform der erfindungsgemäßen Vorrichtung, die der in Figur 5 gezeigt wird, wobei die einzelnen Analysenleitungen zu einem gemeinsamen Multiportventil geführt werden.

Fig. 7.a zeigt eine graphische Darstellung der Messdaten, die bei der Durchführung des Pulsdosierverfahrens in Beispiel B1 für Deuterium und Wasserstoff als Funktion von der Zeit mittels des Massenspektrometers im Produktfluidstrom bestimmt wurden. Die gestrichelte Linie zeigt das Deuterium-Signal und die durchgezogene Linie zeigt das Wasserstoffsignal. Die rechteckige Kurve illustriert die Schaltvorgänge beziehungsweise die Dosierung der Pulse des wasserstoffhaltigen Fluids am Schaltventil. Aufgetragen ist ein Zeitbereich von 180 Sekunden. Die Pulsfrequenz beim Fluidwechsel lag bei 4 pro Minute.

Fig. 7.b zeigt eine graphische Darstellung der Zusammensetzung des Produktfluidstroms in Bezug auf die Zielprodukte als Funktion der Zeit und die im Produktstrom enthaltenen Mengen an $NH_3$ und $ND_3$, die bei der Durchführung des erfindungsgemäßen Verfahrens erhalten wurden. Die Daten wurden beim gleichen Experiment wie Beispiel 1 aufgenommen, wie die Daten, die in

Figur 7.a dargestellt sind. Das bedeutet, die Pulsfrequenz lag bei 4 Pulsen pro Minute. Die gestrichelte Linie zeigt die Menge an $NH_3$ und die durchgezogene Linie zeigt die Menge an $ND_3$ an.

Fig. 8.a zeigt eine schematische Darstellung der Daten die in Beispiel B2 für $H_2$ und $D_2$ im Produktfluidstrom gemessen wurden, als das Verfahren bei einer Pulsfrequenz von 12 Pulsen pro Minute durchgeführt wurde.

Fig. 8.b zeigt eine schematische Darstellung der Daten aus Beispiel B2 für die Mengen an $NH_3$ und $ND_3$ im Produktfluidstrom bei einer Durchführung des Verfahrens bei einer Pulsfrequenz von 12 Pulsen pro Minute. Die gestrichelte Linie zeigt die Menge an $NH_3$ und die durchgezogene Linie zeigt die Menge an $ND_3$ an.

Fig. 9.a zeigt eine schematische Darstellung der Daten die in Beispiel B3 für $H_2$ und $D_2$ im Produktfluidstrom gemessen wurden, als das Verfahren bei einer Pulsfrequenz von 30 Pulsen pro Minute durchgeführt wurde.

Fig. 9.b zeigt eine schematische Darstellung der Daten aus Beispiel B3 für die Mengen an $NH_3$ und $ND_3$ im Produktfluidstrom bei einer Durchführung des Verfahrens bei einer Pulsfrequenz von 30 Pulsen pro Minute. Die gestrichelte Linie zeigt die Menge an $NH_3$ und die durchgezogene Linie zeigt die Menge an $ND_3$ an.

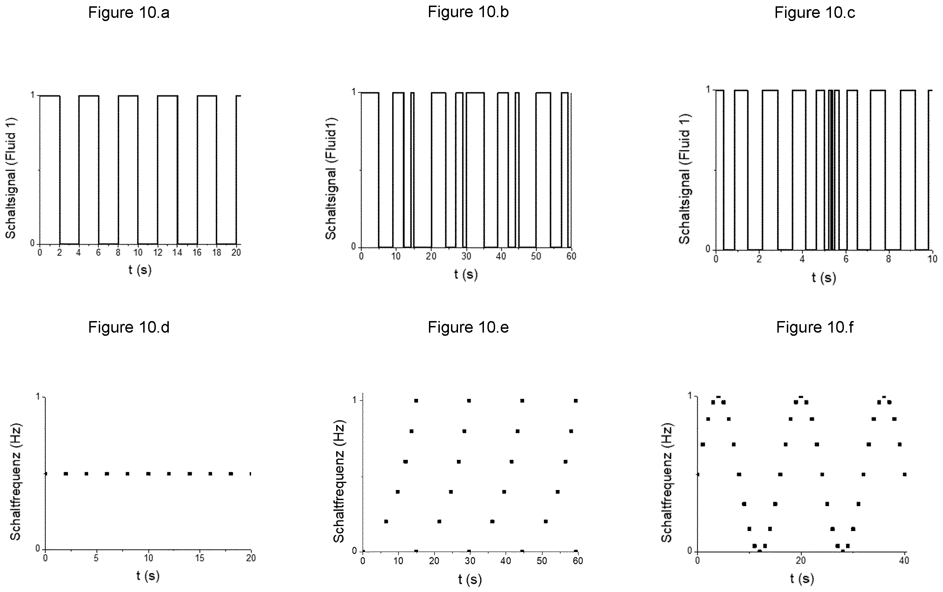

Fig.10.a, 10.b, 10.c zeigen beispielhaft drei verschiedene Pulsfolgen für Fluid 1: in Fig. 10.a wird Fluid 1 mit konstanter Pulsdauer im Wechsel eingeleitet, in Fig. 10.b wird Fluid 1 in einer sägezahnförmigen Pulsfolge eingeleitet und in Fig. 10.c wird Fluid 1 in einer sinusförmigen Pulsfolge eingeleitet.

Fig. 10.d, 10.e, 10.f zeigen die schematischen Darstellung wie in den Fig.10.a, 10.b, 10.c., wobei die Pulsfolgen als Schwingungssignal dargestellt werden und wobei in Fig. 10.d eine Konstante gezeigt wird, in Fig. 10.e wird eine Sägezahnsignal gezeigt und in Fig. 10.f wird eine Sinusschwingung gezeigt.

Fig. 11 zeigt eine schematische Übersicht zu Pulsdosierschritten, die in den Beispielen A - H für zwei unterschiedliche Fluide gezeigt sind, die im Wechsel dosiert werden.

Fig. 12 zeigt eine schematische Darstellung der Ergebnisse der katalytischen Untersuchungen unter stationären Bedingungen, die in den Beispielen VB1 - VB7 bei unterschiedlichen Temperaturen erhalten wurden, sowie die berechnete Gleichgewichtsausbeute (GGW). Auf der Abszisse sind die Temperaturen in Grad Celsius und auf der Ordinate sind die mittels dem MS ermittelten Counts zur Ausbeute an Ammoniak angegeben.

Fig. 13 zeigt eine schematische Darstellung der Verweilzeitsummenfunktion (a) und der Verweilzeitdichtefunktion (b) von Wasserstoff und Deuterium, die die charakteristischen Verweilzeiteigenschaften des Reaktors unter den gewählten Versuchsbedingungen wiedergeben.

Bezugszeichenliste

| | |
|---|---|
| 11, 13, 15, 17 - | Fluidzuführungseinheiten |
| 18 - | Trägerfludizuführungseinheit |
| 21, 23, 25, 27 - | Massenflussregler |
| 43,45,47 - | Fluidkanäle |
| 53, 55, 57 - | Schaltventile |
| 31 - | Zuführungsleitung |
| 33 - | Durchflusszelle, Rohrreaktor |
| 33', 33" - | Durchflusszellen, Rohrreaktoren |
| 34 - | Beheizungsvorrichtung |
| 35 - | Ableitung |
| 37 - | Analysenleitung |
| 39 - | Restriktorelement, Drossel, Kapillare |

40 -        online-Analyseneinheit
42 -        Multiportventil
61 -        Bypassleitung
63 -        Verbindungsstück
64 -        Druckregler
65 -        Abstrom

**Patentansprüche**

1.  Vorrichtung zur Untersuchung von Feststoffen, die zwei oder mehr Fluidzuführungseinheiten (13, 15, 17...), eine Bypassleitung (61), zumindest eine Durchflusszelle (33, 33', 33",...) mit Zuführungsleitung (31) und Ableitung (35), einen Druckregler (64) sowie eine online-Analyseneinheit (40) umfasst, wobei die Fluidzuführungseinheiten (13, 15, 17...) durch Fluidkanäle (43, 45, 47) mit einem oder mehreren Schaltventilen (53, 55, 57) in Wirkverbindung stehen, die mit der Zuführungsleitung (31) und der Bypassleitung (61) verbunden sind und wobei die Vorrichtung **dadurch gekennzeichnet ist, dass** das in der Ableitung (35) eine Analysenleitung (37) zu der online-Analyseneinheit (40), ein Verbindungsstück (63) zu der Bypassleitung (61) und der Druckregler (64) angeordnet sind, wobei das Druckregler (64) mit einem Abstrom (65) verbunden ist, wobei die Vorrichtung so eingerichtet ist, dass die bereitgestellten Fluide in pulsartiger Form und im Wechsel in die Durchflusszelle einleitbar sind, wobei die Dauer der Pulse eines ausgewählten Fluids, vorzugsweise von zwei Fluiden, vorgegeben wird, und zumindest Teile des durch die Ableitung austretende Fluidstrom analytisch charakterisiert werden.

2.  Vorrichtung zur Untersuchung von Feststoffen nach Anspruch 1, wobei die Vorrichtung **dadurch gekennzeichnet ist, dass** es sich bei dem Druckregler (64) in der Ableitung (35) um ein Domdruckregler handelt, der Druckregler (64) des Domdruckventils mit Trägerfluidleitung, respektive Zuführungsleitung (31) in Wirkverbindung steht.

3.  Vorrichtung zur Untersuchung von Feststoffen nach Anspruch 1 oder Anspruch 2, wobei die Vorrichtung **dadurch gekennzeichnet, dass** das Innenvolumen einer einzelnen Durchflusszelle (33, 33', 33",...) jeweils im Bereich von 0,2 - 100 cm$^3$ liegt.

4.  Vorrichtung zur Untersuchung von Feststoffen nach einem der Ansprüche 1 - 3, wobei die Vorrichtung **dadurch gekennzeichnet, dass** jeder Analysenleitungen (37, 37', 37",...) von der Ableitung (35) zur online-Analyseneinheit (40) je ein Restriktionselement (39, 39', 39" ...).

5.  Vorrichtung zur Untersuchung von Feststoffen nach einem der Ansprüche 1 - 4, wobei die Vorrichtung drei oder mehr Fluidzuführungseinheiten aufweist, wobei die drei oder mehr Fluidzuführungseinheiten (13, 15, 17...) eine Fluidzuführungseinheit für Trägerfluid (18) umfassen.

6.  Vorrichtung zur Untersuchung von Feststoffen nach einem der Ansprüche 1 - 5, wobei die Vorrichtung zwei oder mehr Durchflusszellen (33', 33",...) aufweist, wobei die Ableitungen der einzelnen Durchflusszellen (33', 33",...) mit einer gemeinsamen Ableitung (35) verbunden sind, die gemeinsame Ableitung (35) das Verbindungsstück (63) zur Bypassleitung (61) und den Druckregler (64) aufweist und entweder die Analysenleitungen (37', 37",...) von jeder einzelnen Durchflusszelle (33', 33",...) mit je einem online-Analyseneinheit (40) oder die Analysenleitungen (37', 37",...) mit einer Ventilanordnung und einer gemeinsamen online-Analyseneinheit (40) verbunden sind.

7.  Vorrichtung zur Untersuchung von Feststoffen nach einem der Ansprüche 1 - 6, wobei die Vorrichtung **dadurch gekennzeichnet**, die Durchflusszellen (33, 33', 33",...),mit einer Beheizungsvorrichtung (34) oder mehreren Beheizungsvorrichtungen (34) ausgestattet sind.

8.  Verfahren zur Untersuchung von Feststoffen unter Verwendung einer Vorrichtung, die gemäß einem der Ansprüche 1 - 7, wobei das Verfahren die nachfolgenden Schritte umfasst:

    (i) zumindest eine mit Feststoff beladene Durchflusszelle(33, 33', 33",...) wird in der Vorrichtung positioniert und es werden zwei oder mehr unterschiedliche Fluide bereitgestellt, bei denen es sich um ein Gas oder ein Gemisch aus Gas und Flüssigkeit handelt, wobei ein Fluid ein oder mehrere Komponenten in Form von Atomen oder Molekülen enthält, wobei sich unterschiedliche Fluide in ihrer Zusammensetzung unterscheiden, und zwar zumindest in Bezug eine chemische Komponente, die strukturell anders ist und/oder eine andere Stoffmenge an Komponente aufweist gegenüber den anderen Fluiden,

(ii) die bereitgestellten Fluide werden in pulsartiger Form und im Wechsel in die Durchflusszelle eingeleitet, wobei die Dauer der Pulse eines ausgewählten Fluids vorgegeben wird;

(iii) zumindest Teile des durch die Ableitung austretende Fluidstrom werden analytisch charakterisiert, vorzugsweise in Form einer differentiellen Analyse des Fluidstroms in Abhängigkeit von der Zeit.

9. Verfahren zur Untersuchung von Feststoffen nach Anspruch 8, das **dadurch gekennzeichnet ist, dass** der Schritt (ii) des Verfahrens gemäß einem der nachfolgenden Varianten durchgeführt wird:

(ii') in einem ersten Zeitraum werden zwei Fluide im Wechsel jeweils mit konstanter Pulsdauer eingeleitet, wobei die Pulsdauer der Fluide gleich oder verschieden ist, in einem zweiten Zeitraum werden zwei Fluide im Wechsel mit konstanter Pulsdauer eingeleitet, wobei die Pulsdauer von beiden Fluiden gleich oder verschieden ist und wobei sich die Pulsdauer gegenüber der Pulsdauer im ersten Zeitraum unterscheidet;

(ii'') zwei oder mehr Fluide werden in die Durchflusszelle eingeleitet, wobei zumindest eines der Fluide so eingeleitet wird, dass die Pulse dieses zumindest einen Fluids eine Periodizität aufweisen, weiter vorzugsweise werden die Fluide so eingeleitet, dass die Pulse eine Periodizität aufweisen, die sinusförmig oder die sägezahnförmig ist;

(ii''') die in den Schritten (ii), (ii') und (ii'') genannten Verfahrensabläufe werden in Sequenzen zu Schritten kombiniert.

10. Verfahren zur Untersuchung von Feststoffen nach Anspruch 8 oder Anspruch 9, wobei es sich zumindest bei einem der zwei oder mehr Fluide um ein Reaktivfluid handelt und wobei das Verfahren zumindest eine Reaktion umfasst, die aus der nachfolgend genannten Gruppe ausgewählt ist: Oxidationsreaktion, Hydrierungsreaktion, Hydratisierungs-reaktion, Homologisierungreaktion, Kondensations-reaktion, Metathesereaktion, Fischer-Tropsch-Synthese, Methanisierung von CO, Ammoniaksynthese, Ammoniakoxidation, Selektivreduktion von NO, Hydrogenolyse von Ethane, Methanolsynthese, Benzolhydrierung, oxidative Kupplung von Methan, NO/CO Reduktion, CO Oxidation, Selektivoxidation von Propan, Selektivoxidation von Butan, Isobutan-Hydrierung, Vinylacetatsynthese, Hydroformylierung von Ethen.

11. Verfahren zur Untersuchung von Feststoffen nach einem der Ansprüche 8 - 10, das **dadurch gekennzeichnet** ist, das Reaktivfluid einen oder mehrere Reaktanden aus der Gruppe $N_2$, $H_2$, $O_2$, $H_2O$, CO, $CO_2$, Alkane, Alkene, Alkohole, Aromaten, Alkane, Aromaten mit Heteroatomen aus der Gruppe N, O, S umfasst.

12. Verfahren zur Untersuchung von Feststoffen nach einem der Ansprüche 8 - 11, das **dadurch gekennzeichnet ist, dass** das Verfahren eine ausgewählte Reaktion in Verbindung mit zwei oder mehr unterschiedlichen Reaktivfluiden, wobei zumindest zwei unterschiedliche Reaktivfluide als Paar aus markiertem und nicht markiertem Reaktivfluid vor, wobei Markierung Isotopenmarkierung und/oder Markierung mit radioaktiven Elementen bedeutet.

13. Verfahren zur Untersuchung von Feststoffen nach einem der Ansprüche 8 - 12, das **dadurch gekennzeichnet ist, dass** das Verfahren bei einem Druck im Bereich von 0,01 - 300 barg, wobei das Verfahren vorzugsweise ohne Druckschwankungen beziehungsweise frei von Druckstößen erfolgt, wobei die Druckschwankungen von Delta-P in Bezug auf den Gesamtdruck P beim Fluidwechsel $\leq$ 1 % sind.

14. Verfahren zur Untersuchung von Feststoffen nach einem der Ansprüche 8 - 13, das **dadurch gekennzeichnet ist, dass** das Verfahren bei einer Temperatur im Bereich von - 20 bis 1200°C liegt und/oder der durch die Durchflusszelle geleitete Fluidstrom als Gas vorliegt und eine Raumzeitgeschwindigkeit aufweist, die im Bereich von 150 - 300.000 $h^{-1}$ liegt.

15. Verfahren zur Untersuchung von Feststoffen nach einem der Ansprüche 8 - 14, das **dadurch gekennzeichnet ist, dass** die gemäß des Schritts (ii) vorgenommene analytische Charakterisierung wird in Zeitabständen von einer Analyse pro zehn Minuten vorgenommen.

16. Computerprogramm auf einem Datenträger zur Durchführung zum Betrieb einer Vorrichtung gemäß der Ansprüche 1 - 7 und zur Durchführung des Verfahrens nach einem der Ansprüche 8 - 14, wobei das Computerprogramm eine Bewertung der Daten umfasst, die bei der Analyse bestimmt werden, die Daten in einer Datenbank abgelegt werden, das Computerprogramm in der Lage ist, die Daten in Korrelationen zu verwenden.

**Claims**

1. An apparatus for analyzing solids, which comprises two or more fluid feed units (13, 15, 17 ...), a bypass conduit (61), at least one flow cell (33, 33', 33",...) with feed conduit (31) and drain (35), a pressure regulator (64) and an online analysis unit (40), where the fluid feed units (13, 15, 17 ...) are functionally connected by fluid channels (43, 45, 47) to one or more switching valves (53, 55, 57) that are connected to the feed conduit (31) and the bypass conduit (61), and where the apparatus is **characterized in that** the an analysis conduit (37) to the online analysis unit (40), a connecting piece (63) to the bypass conduit (61) and the pressure regulator (64) are disposed in the drain (35), where the pressure regulator (64) is connected to an output stream (65), where the apparatus is set up such that the fluids provided can be introduced into the flow cell in pulsed form and in alternation, where the duration of the pulses of a selected fluid, preferably of two fluids, is defined, and at least portions of the fluid stream exiting via the drain are characterized analytically.

2. The apparatus for analyzing solids according to claim 1, where the apparatus is **characterized in that** the pressure regulator (64) in the drain (35) is a dome-loaded pressure regulator, the pressure regulator (64) of the dome pressure valve is functionally connected to the carrier fluid conduit, or feed conduit (31).

3. The apparatus for analyzing solids according to claim 1 or claim 2, where the apparatus is **characterized in that** the internal volume of a single flow cell (33, 33', 33",...) is in each case in the range of 0.2-100 cm$^3$.

4. The apparatus for analyzing solids according to any of claims 1-3, where the apparatus is **characterized in that** each analysis conduits (37, 37', 37",...) from the drain (35) to the online analysis unit (40) each a restriction element (39, 39', 39",...).

5. The apparatus for analyzing solids according to any of claims 1-4, wherein the apparatus has three or more fluid feed units, wherein the three or more fluid feed units (13, 15, 17 ...) comprise a fluid feed unit for carrier fluid (18).

6. The apparatus for analyzing solids according to any of claims 1-5, wherein the apparatus has two or more flow cells (33', 33",...), wherein the drains from the individual flow cells (33', 33'',...) are connected to a common drain (35), the common drain (35) has the connecting piece (63) to the bypass conduit (61) and the pressure regulator (84), and either the analysis conduits (37', 37",...) of each individual flow cell (33', 33",...) are each connected to one online analysis unit (40) or the analysis conduits (37', 37",...) are connected to a valve arrangement and a common online analysis unit (40).

7. The apparatus for analyzing solids according to any of claims 1-6, where the apparatus is characterized the flow cells (33, 33', 33",...) are equipped with a heating apparatus (34) or multiple heating apparatuses (34).

8. A method of analyzing solids using an apparatus which according to any of claims 1-7, wherein the method comprises the following steps:

   (i) at least one solids-laden flow cell (33, 33', 33'',...) is positioned in the apparatus and two or more different fluids are provided, which are a gas or a mixture of gas and liquid, where one fluid contains one or more components in the form of atoms or molecules, where different fluids differ in terms of their composition, specifically at least in relation to one chemical component which is structurally different and/or has a different molar amount of component compared to the other fluids,
   (ii) the fluids provided are introduced into the flow cell in pulsed form and in alternation, where the duration of the pulses of a selected fluid is defined;
   (iii) at least portions of the fluid stream exiting via the drain are characterized analytically, preferably in the form of a differential analysis of the fluid stream as a function of time.

9. The method of analyzing solids according to claim 8, which is **characterized in that** step (ii) of the method is conducted according to one of the following variants:

   (ii') in a first period two fluids are introduced alternately each with a constant pulse duration, where the pulse duration of the fluids is the same or different, in a second period two fluids are introduced alternately with a constant pulse duration, where the pulse duration of the two fluids is the same or different and where the pulse duration is different with respect to the pulse duration in the first period;
   (ii") two or more fluids are introduced into the flow cell, where at least one of the fluids is introduced such that the pulses of this at least one fluid have periodicity, and the fluids are further preferably introduced such that the pulses have periodicity in sinusoidal or sawtooth form;

(ii''') the method procedures specified in steps (ii), (ii') and (ii'') are combined into sequences to give steps.

10. The method of analyzing solids according to claim 8 or claim 9, wherein at least one of the two or more fluids is a reactive fluid and wherein the method comprises at least one reaction selected from the following group: oxidation reaction, hydrogenation reaction, hydration reaction, homologization reaction, condensation reaction, metathesis reaction, Fischer-Tropsch synthesis, methanation of CO, ammonia synthesis, ammonia oxidation, selective reduction of NO, hydrogenolysis of ethane, methanol synthesis, benzene hydrogenation, oxidative coupling of methane, NO/CO reduction, CO oxidation, selective oxidation of propane, selective oxidation of butane, isobutane hydrogenation, vinyl acetate synthesis, hydroformylation of ethene.

11. The method of analyzing solids according to any of claims 8-10, which is **characterized in that** the reactive fluid comprises one or more reactants from the group of $N_2$, $H_2$, $O_2$, $H_2O$, CO, $CO_2$, alkanes, alkenes, alcohols, aromatics, alkanes, aromatics with heteroatoms from the group of N, O, S.

12. The method of analyzing solids according to any of claims 8-11, which is **characterized in that** the method a selected reaction in conjunction with two or more different reactive fluids, where at least two different reactive fluids as a pair of labeled and unlabeled reactive fluid before, where labeling means isotope labeling and/or labeling with radioactive elements.

13. The method of analyzing solids according to any of claims 8-12, which is **characterized in that** the method at a pressure in the range of 0.01-300 barg, where the method is effected preferably without pressure fluctuations or free of pressure pulses, where the pressure fluctuations of delta P in relation to the total pressure P on fluid exchange are $\leq$ 1%.

14. The method of analyzing solids according to any of claims 8-13, which is **characterized in that** the method is at a temperature in the range from -20 to 1200°C and/or the fluid stream guided through the flow cell is in gaseous form and is at a space velocity in the range of 150-300 000 h$^{-1}$.

15. The method of analyzing solids according to any of claims 8-14, which is **characterized in that** the analytical characterization undertaken in step (ii) is conducted at time intervals of one analysis per ten minutes.

16. Computer program on a data storage medium for performance for operation of an apparatus according to claims 1-7 and for performance of the method according to any of claims 8-14, wherein the computer program comprises an assessment of the data that are determined in the analysis, the data are recorded in a database, the computer program is capable of using the data in correlations.

## Revendications

1. Dispositif destiné à analyser des solides, qui comprend deux unités d'alimentation en fluide ou plus (13, 15, 17...), une conduite de dérivation (61), au moins une cellule d'écoulement (33, 33', 33",...) pourvue d'une conduite d'alimentation (31) et d'une conduite d'évacuation (35), un régulateur de pression (64) ainsi qu'une unité d'analyse en ligne (40), les unités d'alimentation en fluide (13, 15, 17...) étant en liaison active, par l'intermédiaire de canaux fluidiques (43, 45, 47), avec une ou plusieurs vannes de commutation (53, 55, 57) qui sont reliées à la conduite d'alimentation (31) et à la conduite de dérivation (61) et le dispositif étant **caractérisé en ce que** le une conduite d'analyse (37) vers l'unité d'analyse en ligne (40), une pièce de raccordement (63) vers la conduite de dérivation (61) et le régulateur de pression (64) sont agencés dans la conduite d'évacuation (35), le régulateur de pression (64) étant relié à un flux d'évacuation (65), le dispositif étant conçu de manière telle que les fluides préparés peuvent être guidés sous forme pulsée et en alternance dans la cellule d'écoulement, la durée de l'impulsion d'un fluide sélectionné, de préférence de deux fluides, étant spécifiée et au moins des parties du flux de fluide sortant de la conduite d'évacuation étant caractérisées de manière analytique.

2. Dispositif destiné à analyser des solides selon la revendication 1, le dispositif étant **caractérisé en ce que** le régulateur de pression (64) dans la conduite d'évacuation (35) est un régulateur de pression à dôme, le régulateur de pression (64) de la soupape de pression à dôme étant en liaison active avec la conduite de fluide support, respectivement la conduite d'alimentation (31).

3. Dispositif destiné à analyser des solides selon la revendication 1 ou la revendication 2, le dispositif étant **caractérisé en ce que** le volume interne d'une seule cellule d'écoulement (33, 33', 33",...) se situe à chaque fois dans la plage de 0,2-100 cm$^3$.

4. Dispositif destiné à analyser des solides selon l'une quelconque des revendications 1-3, le dispositif étant **caractérisé en ce que** chaque conduite d'analyse (37, 37', 37",...) de la conduite d'évacuation (35) vers l'unité d'analyse en ligne (40) un élément de restriction (39, 39', 39", ...).

5. Dispositif destiné à analyser des solides selon l'une quelconque des revendications 1-4, le dispositif présentant trois unités d'alimentation en fluide ou plus, les trois unités d'alimentation en fluide ou plus (13, 15, 17...) comprenant une unité d'alimentation en fluide pour un fluide support (18).

6. Dispositif destiné à analyser des solides selon l'une quelconque des revendications 1-5, le dispositif présentant deux cellules d'écoulement ou plus (33', 33",...), les conduites d'évacuation des différentes cellules d'écoulement (33', 33",...) étant reliées à une conduite d'évacuation commune (35), la conduite d'évacuation commune (35) présentant la pièce de raccordement (63) à la conduite de dérivation (61) et le régulateur de pression (64) et soit les conduites d'analyse (37', 37",...) de chaque cellule d'écoulement individuelle (33', 33",...) étant reliées à une unité d'analyse en ligne respective (40), soit les conduites d'analyse (37', 37",...) étant reliées à un agencement de vanne et à une unité de conduite d'analyse en ligne commune (40).

7. Dispositif destiné à analyser des solides selon l'une quelconque des revendications 1-6, le dispositif étant caractérisé les cellules d'écoulement (33, 33', 33", ...) sont équipées d'un dispositif de chauffage (34) ou de plusieurs dispositifs de chauffage (34).

8. Procédé destiné à analyser des solides à l'aide d'un dispositif qui selon l'une quelconque des revendications 1-7, le procédé comprenant les étapes suivantes :

(i) au moins une cellule d'écoulement (33, 33', 33",...) chargée d'un solide est positionnée dans le dispositif et deux fluides différents ou plus sont préparés, pour lesquels il s'agit d'un gaz ou d'un mélange de gaz et de liquide, un fluide comprenant un ou plusieurs composants sous forme d'atomes ou de molécules, les différents fluides se distinguant par leur composition et ce au moins en ce qui concerne un composant chimique qui est structuralement différent et/ou qui présente une autre quantité de composant par rapport aux autres fluides,
(ii) les fluides préparés sont introduits sous forme pulsée et en alternance dans la cellule d'écoulement, la durée des impulsions d'un fluide sélectionné étant spécifiée ;
(iii) au moins des parties du flux fluidique sortant de la conduite d'évacuation étant caractérisées de manière analytique, de préférence sous forme d'une analyse différentielle du flux fluidique en fonction du temps.

9. Procédé destiné à analyser des solides selon la revendication 8, qui est **caractérisé en ce que** l'étape (ii) du procédé est réalisée selon l'une des variantes suivantes :

(ii') dans une première période, deux fluides sont introduits en alternance à chaque fois à une durée d'impulsion constante, la durée d'impulsion des fluides étant identique ou différente, dans une deuxième période, deux fluides sont introduits en alternance à une durée d'impulsion constante, la durée d'impulsion des deux fluides étant identique ou différente et la durée d'impulsion étant différente de la durée d'impulsion au cours de la première période ;
(ii") deux fluides ou plus sont introduits dans la cellule d'écoulement, au moins l'un des fluides étant introduit de manière telle que les impulsions dudit au moins un fluide présentent une périodicité, plus préférablement les fluides sont introduits de manière telle que les impulsions présentent une périodicité qui est sinusoïdale ou en forme de dents de scie ;
(ii''') les déroulements de procédé mentionnés dans les étapes (ii), (ii') et (ii") sont combinés séquentiellement en étapes.

10. Procédé destiné à analyser des solides selon la revendication 8 ou la revendications 9, au moins l'un des deux fluides ou plus étant un fluide réactif et le procédé comprenant au moins une réaction qui est choisie dans le groupe mentionné ci-après : réaction d'oxydation, réaction d'hydrogénation, réaction d'hydratation, réaction d'homologation, réaction de condensation, réaction de métathèse, synthèse de Fischer-Tropsch, méthanation de CO, synthèse d'ammoniac, oxydation d'ammoniac, réduction sélective de NO, hydrogénolyse d'éthane, synthèse de méthanol, hydrogénation de benzène, couplage par oxydation de méthane, réduction de NO/CO, oxydation de CO, oxydation sélective de propane, oxydation sélective de butane, hydrogénation d'isobutane, synthèse d'acétate de vinyle, hydroformylation d'éthylène.

11. Procédé destiné à analyser des solides selon l'une quelconque des revendications 8-10, qui est **caractérisé en ce que** le fluide réactif comprend un ou plusieurs réactifs du groupe constitué par $N_2$, $H_2$, $O_2$, $H_2O$, CO, $CO_2$, alcanes, alcènes, alcools, aromatiques, alcanes, aromatiques comprenant des hétéroatomes du groupe N, O, S.

12. Procédé destiné à analyser des solides selon l'une quelconque des revendications 8-11, qui est **caractérisé en ce que** le procédé une réaction sélectionnée en association avec deux fluides réactifs différents ou plus, au moins deux fluides réactifs différents se trouvant sous forme d'une paire constituée par un fluide réactif marqué et un fluide réactif non marqué pour, le marquage signifiant un marquage par des isotopes et/ou un marquage par des éléments radioactifs.

13. Procédé destiné à analyser des solides selon l'une quelconque des revendications 8-12, qui est **caractérisé en ce que** le procédé une pression dans la plage de 0,01-300 barg, le procédé se déroulant de préférence sans variation de pression ou, selon le cas, sans coups de bélier, les variations de pression étant de Delta-P $\leq$ 1% par rapport à la pression totale P lors du changement de fluide.

14. Procédé destiné à analyser des solides selon l'une quelconque des revendications 8-13, qui est **caractérisé en ce que** le procédé est réalisé à une température dans la plage de -20 à 1200°C et/ou le flux fluidique guidé à travers la cellule d'écoulement se trouve sous forme de gaz et présente une vitesse de propagation qui se situe dans la plage de 150-300 000 h$^{-1}$.

15. Procédé destiné à analyser des solides selon l'une quelconque des revendications 8-14, qui est **caractérisé en ce que** la caractérisation analytique réalisée selon l'étape (ii) est réalisée à des intervalles de temps d'une analyse par 10 minutes.

16. Programme informatique sur un support de données pour la réalisation pour le fonctionnement d'un dispositif selon l'une quelconque des revendications 1-7 et pour la réalisation du procédé selon l'une quelconque des revendications 8-14, le programme informatique comprenant une évaluation des données qui sont déterminées lors de l'analyse, les données étant enregistrées dans une base de données, le programme informatique étant en mesure d'utiliser les données dans des corrélations.

Figure 1

Figure 2

Figure 3

Figure 4

Figure 5

Figure 6

Figure 7.a

Figure 7.b

Figure 8.a

Figure 8.b

Figure 9.b

Figure 9.a

Figure 10.a

Figure 10.b

Figure 10.c

Figure 10.a

Figure 10.b

Figure 10.c

Figure 10.d

Figure 10.e

Figure 10.f

Figure 10.d

Figure 10.e

Figure 10.f

EP 3 960 286 B1

Figure 11

Figure 12

EP 3 960 286 B1

Figure 13.a

Figure 13.b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015052212 A

- WO 2019020655 A

**In der Beschreibung aufgeführte Nicht-Patentliteratur**

- **J. T. GLEAVES et al.** *J. Molec. Catal. A: Chemical,* 2010, vol. 315, 108-134
- **X. ZHENG ; M.A. PEPERA et al.** Verfahren zur Durchführung von Pulsexperimenten offenbart. *Appl. Catal. A: Gen.,* 2008, vol. 341, 86-92

- **M.A. PEPERA et al.** *J. Am. Chem. Soc.,* 1985, vol. 107, 4883-4892